# EUROPEAN PATENT APPLICATION

(11) **EP 1 233 348 A1**
(43) Date of publication of application: **21.08.2002**
(21) Application number: 01103577.1
(22) Date of filing: 20.02.2001
(51) Int. Cl.: G06F 17/30, H04L 29/06, H04N 7/173

(54) **Data transmission system**

(71) Applicant: MATSUSHITA ELECTRIC INDUSTRIAL CO., LTD., Kadoma-shi, Osaka 571-8501 (JP)
(72) Inventor: Kokado, Takeshi, Kyotanabe-shi, Kyoto-fu (JP); Yokota, Hiroshi, Suita-shi, Osaka-fu (JP)
(74) Representative: Lang, Johannes, Dipl.-Ing.

(57) **Abstract**

In a data transmission system , a content server 6 sends out content data designated by a content reservation request from a DTE 1 onto a first or a second communications circuit 4 or 5 for storage into a DCE 3 connected to the DTE 1. The content reservation request also indicates a time limit by when the designated content data is to be ready in the DCE 3. The content server 6 manages thus designated time limit. The content server 6 also carries out scheduling processing. During the processing, based on both the time limit under management and predetermined communications information, determined is a transmission timing which ensures the content data completely transmitted by the time limit, and which communications circuit 4 or 5 is optimal. These are determined on the basis of both the managed time limit and predetermined communications information. The content server 6 then sends out the content data onto thus determined optimal communications circuit 4 or 5 with the transmission timing determined through the scheduling processing. Accordingly, the data transmission system can achieve efficient use of a communications circuit in terms of transmission bandwidth, and data download from a server at less expense.

## Description

### BACKGROUND OF THE INVENTION

### Field of the Invention

The present invention relates to data transmission systems and, more specifically, to a system for data transmission from a server to a data circuit terminating equipment connected to a data terminal equipment. Here, data is the one reserved by the data terminal equipment for data transmission from the server.

### Description of the Background Art

There have been proposed various data transmission systems which are of a type as described above. Here, taken as an example is the data transmission system disclosed in Japanese Patent Laid-Open Publication No. 8-140081 (96-140081), which includes a device in an information source (hereinafter, referred to as server), and an information storage unit which receives the information on the user's side. The server and the information storage unit are connected to each other over a network. The server waits for users' requests for data transmission until a data distribution time, which has been set under a predetermined manner. Even if one request comes, the server waits for others requesting for transmission of the same data for the time period. When the distribution time comes, the server sends the requested data onto a communications circuit. Then, the information storage unit on the user's side receives and stores the data therein. As such, in such conventional data transmission system, the server can selectively perform data transmission in a time period when, before the data distribution time, the communications circuit is not congested. In this manner, the communications circuit can be efficiently utilized.

The issue here is, the communications circuit varies in characteristics depending on its type. As an example, a wired public circuit typified by ISDN is not suited for multicasting. This is because, any transmission bandwidth of many data channels in the public circuit is occupied by multicasting, simultaneously transmitting the same data to many users using the public communications circuit. Unlike the wired public circuit, a satellite circuit may be a possibility for multicasting since data transmission is performed through shared use of a transmission bandwidth. However, the conventional data transmission system still bears a problem of not efficiently utilizing the transmission bandwidth of the communications circuit since data is unconditionally sent out to the same communications circuit regardless of the number of users receiving the data. Here, assume that the data transmission system has a wired public circuit only. In such case, a server in the system has to transmit data through the wired public circuit no matter if multicasting is preferable, resulting in a waste of transmission bandwidth.

The conventional data transmission system bears another problem regarding a communications expense. In a case where a user wants to download relatively large data such as moving pictures, the communications expense therefor is high.

### SUMMARY OF THE INVENTION

Therefore, an object of the present invention is to provide a data transmission system which achieves efficient use of a communications circuit in terms of transmission bandwidth, and data download from a server at less expense.

The present invention has the following features to attain the object above.

A first aspect of the present invention is directed to a data transmission system in which a server sends out, onto any one of communications circuits, content data designated by a content reservation request to a data circuit terminating equipment connected to a data terminal equipment for storage, wherein
the content reservation request additionally indicates a time limit by when the content data designated by the data terminal equipment is to be ready in the data circuit terminating equipment,
either the server or any one of the communications circuits comprises:
a time limit management part for managing the time limit designated by the content reservation request from the data terminal equipment; and
a scheduling part for determining, on the basis of both the time limit managed in the time limit management part and predetermined communications information, a transmission timing which ensures the content data completely transmitted by the time limit and an optimal communications circuit among from the communications circuits, and
the server comprises a data send out part for sending out the content data onto the optimal communications circuit according to the transmission timing determined by the scheduling part.

A second aspect of the present invention is directed to a data transmission system in which content data designated by a content reservation request from a server to a data terminal equipment through a communications circuit, wherein
the content reservation request additionally indicates a download condition for downloading the content data designated by the data terminal equipment;
the data transmission system comprises:
a content reservation status data generation part for generating content reservation status data indicating the download condition for the content data on the basis of the content reservation request which has been received; and
a data transmission part for transmitting the content reservation status data generated by the content reservation status data generation part to the data terminal equipment,
by comprising the content reservation status data generation part and the data transmission part, the transmission system induces other data terminal equipment by showing the content data is available under the download condition, and
the transmission system further comprises:
a DL condition management part for managing the content data and the download condition designated by the content reservation request from the data terminal equipment;
   a scheduling part for determining, on the basis of the download condition managed in the DL condition management part, a transmission timing which ensures the content data transmitted under the download condition, and
a data send out part for sending out the content data onto the communications circuit according to the transmission timing determined by the scheduling part.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a diagram showing the entire configuration of a data transmission system according to a first embodiment of the present invention;
FIG. 2 is a block diagram showing the configuration of a data circuit terminating equipment (DCE) 3 of FIG. 1:
FIG. 3 is a block diagram showing the configuration of a content server 6 of FIG. 1;
FIG. 4 is a diagram showing the configuration of a content data CD stored in a content storage 64 of FIG. 3;
FIG. 5 is a schematic diagram of an addressee list L_{DEST} stored in an addressee list storage 65 of FIG. 3;
FIG. 6 is a schematic diagram of a charge list L_{PAY} stored in a charge list storage 66 of FIG. 3;
FIG. 7 is a schematic diagram of a transmission expense list L_{TC} stored in a transmission expense list storage 67 of FIG. 3;
FIG. 8 is a schematic diagram of a transmission initial expense list L_{ITC} stored in a transmission initial expense list storage 68 of FIG. 3;
FIG. 9 is a first half of a sequence chart showing a communications procedure in the data transmission system of FIG. 1;
FIG. 10 is a second half of the sequence chart showing the communications procedure in the data transmission system of FIG. 1;
FIG. 11 is a flowchart showing step ST1 of FIG. 9 in more detail for its processing procedure;
FIG. 12 is a diagram for demonstrating the contents of content reservation status data D_{RS} of FIG. 9;
FIGS. 13a to 13g are diagrams for demonstrating the configuration of data and signals shown in both FIGS. 9 and 10;
FIG. 14 is a flowchart showing step ST13 of FIG. 9 in more detail for its processing procedure;
FIG. 15 is a flowchart showing step ST8 of FIG. 10 in more detail for its processing procedure;
FIGS. 16a to 16c are diagrams each showing a unit record UR₁ which is updated or newly-generated in step ST8 of FIG. 15;
FIG. 17 is a flowchart showing step ST9 of FIG. 10 in more detail for its processing procedure;
FIG. 18 is a flowchart showing step ST92 of FIG. 17 in more detail for its processing procedure;
FIGS. 19a and 19b are diagrams for demonstrating a communications circuit flag F_{CIR} set by the processing of FIG. 18;
FIGS. 20a and 20b are diagrams schematically showing steps ST94 to ST99 of FIG. 17 by its processing;
FIG. 21 is a flowchart showing step ST10 of FIG. 10 in more detail for its processing procedure;
FIG. 22 is a flowchart showing step ST11 of FIG. 10 in more detail for its processing procedure;
FIGS. 23a to 23c are drawings demonstrating a content data set CDS in a second embodiment of the present invention;
FIG. 24 is a block diagram showing the configuration of a DCE 3 in the second embodiment;
FIG. 25 is a first half of a sequence chart showing a communications procedure in a data transmission system of the second embodiment;
FIG. 26 is a second half of the sequence chart showing the communications procedure in the data transmission system of the second embodiment;
FIGS. 27a and 27b are diagrams demonstrating a selection condition list L_{SC} stored in a selection condition list storage 36 of FIG. 24;
FIG. 28 is a flowchart showing step ST22 of FIG. 25 in more detail for its processing procedure;
FIG. 29 is a flowchart showing step ST11' of FIG. 26 in more detail for its processing procedure;
FIG. 30 is a diagram showing an allocation list L_{ST} stored in an allocation list storage 37 of FIG. 24;
FIG. 31 is a flowchart showing step ST23 of FIG. 26 in more detail for its processing procedure;
FIG. 32 is a flowchart showing step ST14' of FIG. 26 in more detail for its processing procedure;
FIG. 33 is a diagram showing a specific example of a content data set stored in a content storage 35 of FIG. 24; and
FIG. 34 is a diagram showing a specific example of a content data CD sent out from a user interface 32 of FIG. 24.

### DESCRIPTION OF THE PREFERRED EMBODIMENTS

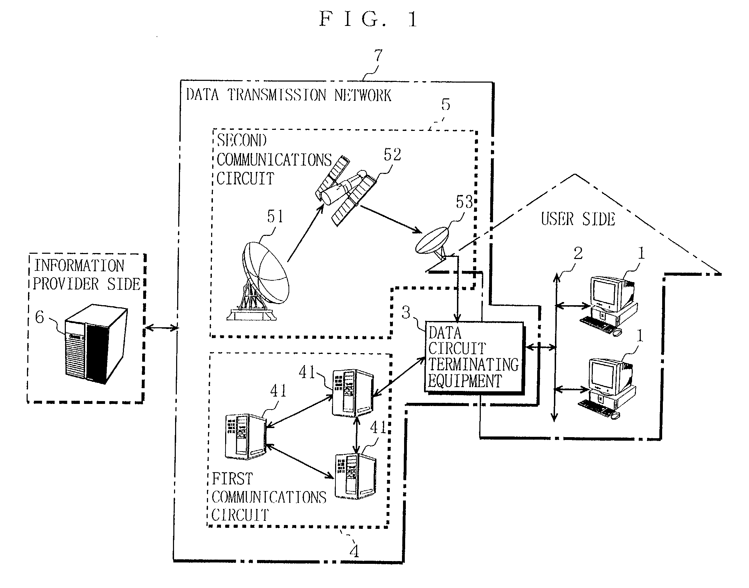

FIG. 1 is a diagram showing the entire configuration of a data transmission system according to a first embodiment of the present invention. In FIG. 1, the data transmission system includes a data terminal equipment (hereinafter, referred to as DTE, herein two DTEs are illustrated) 1, a wired or wireless transmission path 2, a data circuit terminating equipment (hereinafter, referred to as DCE) 3, a first and a second communications circuits 4 and 5 exemplified for a plurality of communications circuits in claims, and a content server (hereinafter, simply referred to as server) 6.

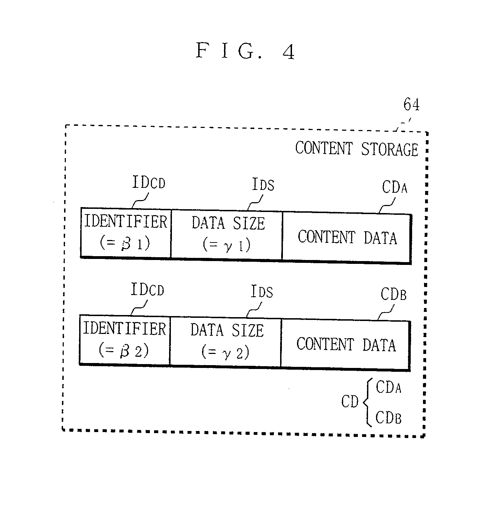

The DTE 1 is operable by a user as is a personal computer, and carries out output processing on a content data CD (see FIG. 4) downloaded from the server 6 to output to the user what the content data CD presents. The DTE 1 is connected to the DCE 3 through the transmission path 2 for bidirectional data communications therebetween.

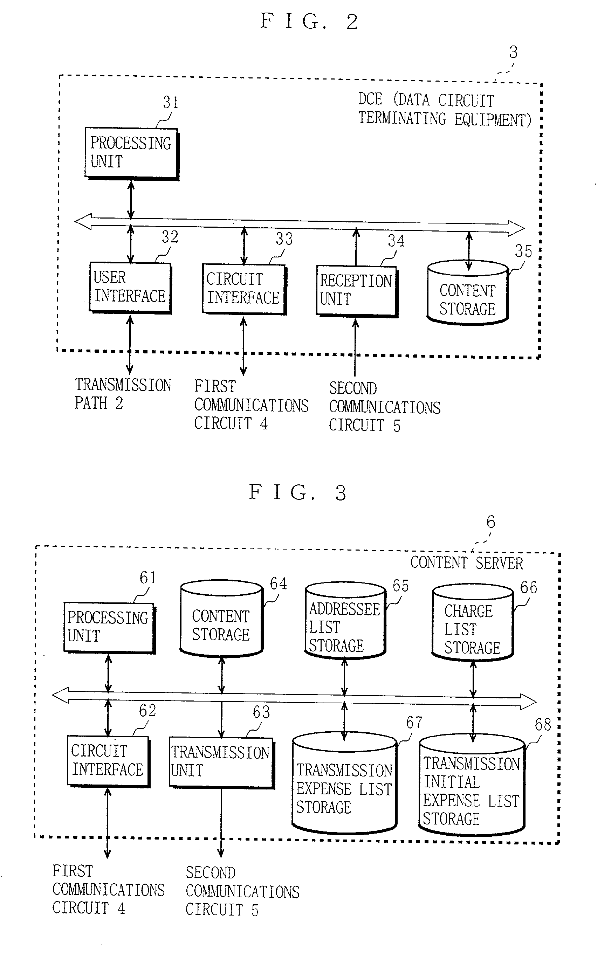

The DCE 3 is connected to at least one exchange system 41 (will be later described), and performs bidirectional data communications with the server 6 through the first communications circuit 4. In the DCE 3, power is supplied for operation, preferably, from the first communications circuit 4, which is wired. The DCE 3 is also connected to a reception antenna 53 (later described), and receives data from the server 6 through the second communications circuit 5. The DCE 3 includes, as shown in FIG. 2, a processing unit 31, a user interface 32, a circuit interface 33, a reception unit 34, and a content storage 35.

Such DTE 1 and DCE 3 are placed on the user's side (typically in the user's house) as shown in FIG. 1. Here, the DTE 1 may be plurally provided. FIG. 1 shows a set thereof only for one user for convenience, but the actual data transmission system includes many sets of equipment, which are at least one DTE 1 and the DCE 3, on the user side. Each of the equipment provided on the user's side is assigned, in advance, unique identifier ID_{USER} for user identification. In this embodiment, the identifier ID_{USER} assigned to the set of the DTEs 1 and the DCE 3 of FIG. 1 is presumably α₁.

The first communications circuit 4 is a wired public circuit having several exchange systems 41 provided therein. Those exchange systems 41 are connected to one another via a communications line typified by an optical fiber cable, a twisted pair wire, and/or a coaxial cable. Such first communications circuit 4 is suited for transmitting each different content data CD to many DTEs 1 thanks to the exchange systems 41 each performing routing. However, the first communications circuit 4 is not suited for multicasting. This is because, if the server 6 simultaneously distributes the same content data CD to many DTEs 1 over the first communications circuit 4, any transmission bandwidth of many data channels is occupied by data distribution.

The second communications circuit 5 includes, in this embodiment, a transmission antenna 51, and a satellite circuit including an artificial satellite 52 and the reception antenna 53. Unlike the first communications circuit 4, the second communications circuit 5 is suitable for multicasting as allows shared use of a bandwidth for transmission of the same content data CD to many DTEs 1. However, the second communications circuit 5 is not good for transmitting each different content data CD to many DTEs 1 as a transmission bandwidth thereof is sharable by all of those DTEs 1. If various content data CDs are sent out onto the second communications circuit 5, it will soon be short of transmission bandwidth. Here, as shown in FIG. 1, the DCE 3, and the first and second communications circuits 4 and 5 configure a data transmission network 7.

The server 6 is placed on the information provider's side from where the content data CD is distributed to the users', and is previously assigned unique identifier ID_{SERVER} for server identification. The server 6 is connected to at least one exchange system 41, and performs bidirectional data communications with the DCE 3 through the first communications circuit 4. The server 6 is also connected to the transmission antenna 51, and transmits data to the DTE 1 over the second transmission circuit 5. As shown in FIG. 3, the server 6 includes a processing unit 61, a circuit interface 62, a transmission unit 63, a content storage 64, an addressee list storage 65, a charge list storage 66, a transmission expense list storage 67, and a transmission initial expense list storage 68.

As shown in FIG. 4, the content storage 64 stores several types of content data CDs. The content data CD is typically moving picture data, static picture data, audio data, object data, character data, or a combination of two or more of such data. Also, the content data CD is provided with at least identifier ID_{CD} and data size I_{DS}. The identifier ID_{CD} uniquely specifies a recording location where the content data CD is stored in the content storage 64. The data size I_{DS} shows the content data CD by size. In this embodiment, as shown by the accompanying drawings, stored in the content storage 64 are content data CD_{A} and CD_{B}. Here, presumably, the content data CD_{A} is provided with β₁ for the identifier ID_{CD} and γ₁ for the data size I_{DS}, while the content data CD_{B} with β ₂ and γ₂, respectively.

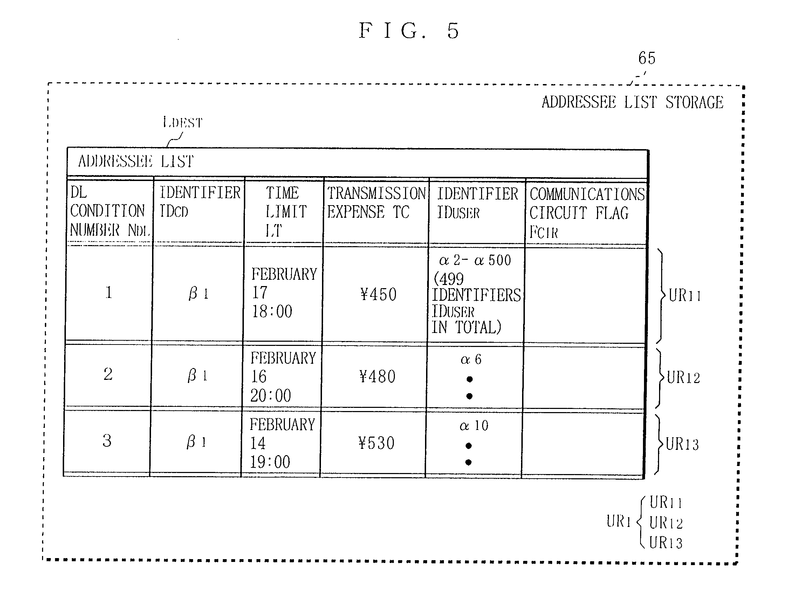

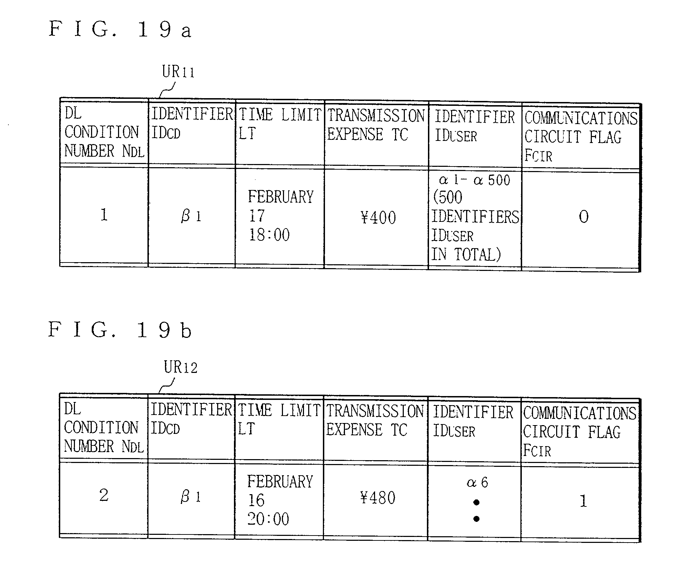

The addressee list storage 65 is corresponding to a time limit management part and a DL condition management part in claims, and stores an addressee list L_{DEST} therein. As shown in FIG. 5, the addressee list L_{DEST} is composed of several unit records UR₁, herein exemplarily UR₁₁ to UR₁₃. Each unit record UR₁ indicates what are the conditions for downloading the content data CD therein. Specifically, included in each of the unit records UR₁ are a download condition number (hereinafter, referred to as DL condition number) N_{DL}, identifier ID_{CD}, a time limit LT, a transmission expense TC, at least one identifier ID_{USER}, and a communications circuit flag F_{CIR}. Herein, the DL condition number N_{DL} uniquely specifies the unit record UR₁, and the identifier ID_{CD} specifies which content data CD is at a user's request for data transmission. The time limit LT is a user designated time for the content data CD at the user's request to be ready in the content storage 35 of the DCE 3. The identifier ID_{USER} shows, specifically in the addressee list L_{DEST}, the DCE 3 which receives the content data CD. The transmission expense TC indicates how much the user is to be charged for the content data CD transmitted from the server 6 to the DCE 3. The communications circuit flag F_{CIR} indicates which communications circuit is to be used for the transmission. In this embodiment, presumably, a value of 1 for the communications circuit flag F_{CIR} indicates the first communications circuit 4, while a value of 0 the second communications circuit 5 (refer to FIGS. 19a and 19b).

In this example of FIG. 5, specifically, the unit record UR₁₁ shows β₁ for the identifier ID_{CD}, 18:00 on February 17 for the time limit LT, and α₂ to α₂₀ for the identifier ID_{USER}. Here, α₂ to α₅₀₀ mean 499 sets of equipment, exclusive of the set α ₁ in FIG. 1. Accordingly, the content data CD_{A} is transmitted, by 18:00 on February 17, to 499 DCEs 3 specified by the identifier ID_{USER}. Further, the unit record UR₁₁ shows ¥450 for the transmission expense TC, which means the current transmission expense of the content data CD_{A} for those 499 DCEs is ¥450. Here, the unit records UR₁₂ and UR₁₃ are not described as are similar to the unit record UR₁₁. Note that, the unit records UR₁ exemplified herein show only the identifier ID_{CD} of β₁, which means no user is requesting for transmission of the content data CD_{B}.

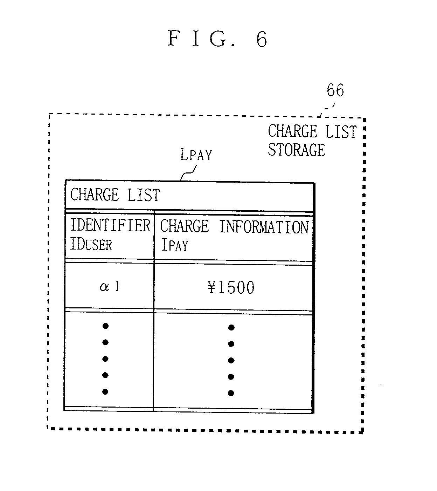

The charge list storage 66 stores a charge list L_{PAY}. As shown in FIG. 6, the charge list L_{PAY} is composed of charge information I_{PAY} for every identifier ID_{USER}. The charge information I_{PAY} indicates how much a user specified by the corresponding identifier ID_{USER} needs to pay, in total, for the content data CD(s) his/her downloaded in a predetermined time period. Note herein that, for easy understanding, the charge information I_{PAY} presumably indicates the total amount of the transmission expense TC. This is not restrictive, and other type of expenses (i.e., copyright fee) may be included therein.

The charge list L_{PAY} in FIG. 6 exemplifies a case where the identifier ID_{USER} is α₁, and the charge information I_{PAY} therefor is ¥1,500. Cases for other identifier ID_{USER} are not described here for convenience.

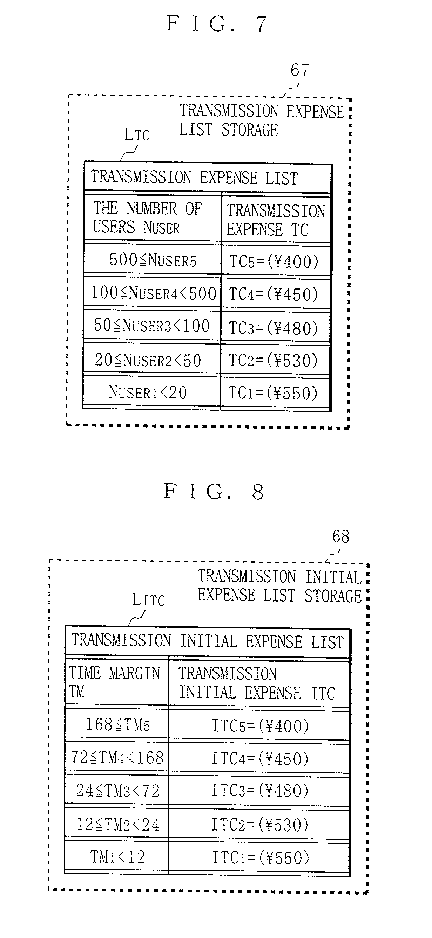

The transmission expense list storage 67 stores a transmission expense list L_{TC}. As shown in FIG. 7, the transmission expense list L_{TC} indicates the transmission expense TC varying with the number of users N_{USER} requesting for data transmission. In this embodiment, the number of users N_{USER} is put into 5 classes of N_{USER1} to N_{USER5}, depending on the number. As an example, the number of users N_{USER1} covers a range of 1 to 19, and the transmission expense TC therefor is fixedly ¥550. For other classes of the number of users N_{USER2} to N_{USER5}, FIG. 7 is referred to.

The transmission initial expense list storage 68 stores a transmission initial list L_{ITC}, which shows the transmission expense TC in its initial value. As shown in FIG. 8, the transmission initial expense list L_{ITC} shows the transmission initial expense varying with a time margin TM, which is a length of time from the server 6 receiving a user's content reservation request RS_{TR} to the time limit LT designated thereby. In this embodiment, the time margin TM is put into 5 classes of TM₁ to TM₅, depending on the number. For example, the time margin TM₁ covers a range of 0 to 12 (hour), and the transmission initial expense ITC₁ therefor is fixedly ¥550. For other classes of the time margin TM₂ to TM₅, FIG. 8 is referred to.

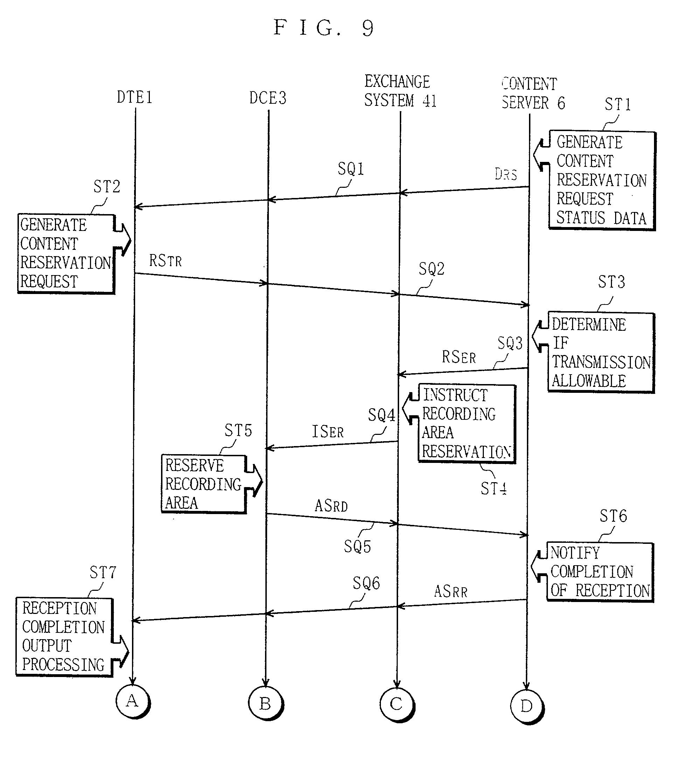

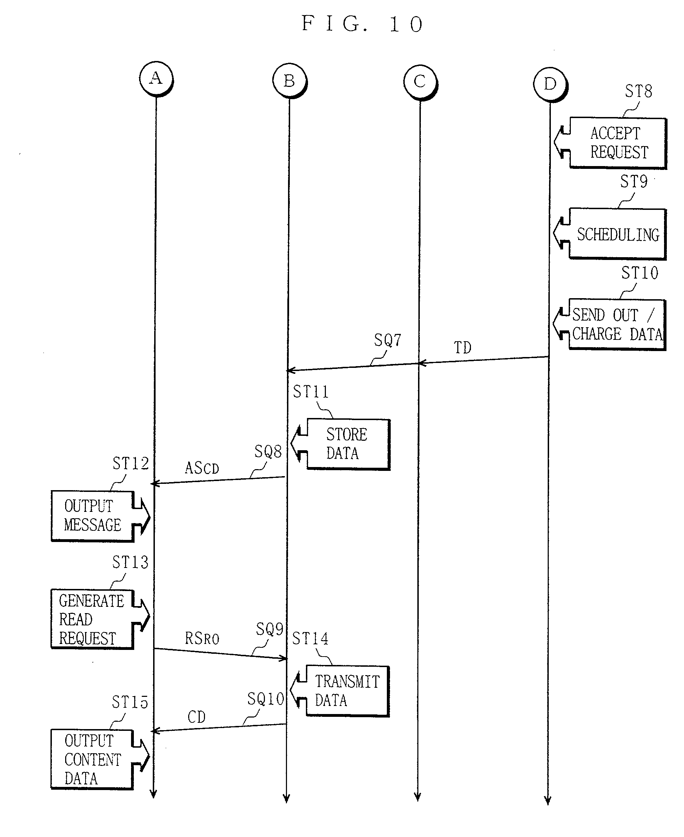

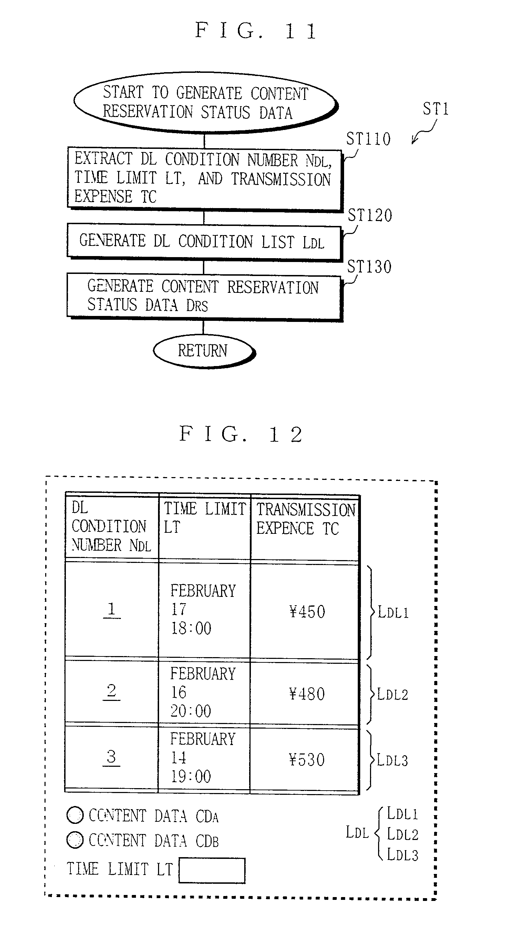

Described next is the communications procedure for the DTE 1 to retrieve a content data CD in the above-structured data transmission system with reference to sequence charts of FIGS. 9 and 10. First, in FIG. 9, in response to a request coming from the DTE 1 (not shown) , the server 6 generates content reservation status data D_{RS} based on an addressee list L_{DEST} currently stored (step ST1). This step ST1 corresponds to a content reservation status data generation part in claims, and FIG. 11 shows the processing procedure thereof in detail. In FIG. 11, the processing unit 61 of the server 6 extracts, from each unit record UR₁ found in the addressee list L_{DEST} (see FIG. 5), a DL condition number N_{DL}, a time limit LT, and a transmission expense TC (step ST110). Next, the processing unit 61 generates download condition list (hereinafter, referred to as DL condition list) L_{DL} for every extracted set of the DL condition number N_{DL}, the time limit LT, and the transmission expense TC (step ST120). The DL condition list specifies what are the conditions for downloading any content data CD.

After step ST120, the processing unit 61 generates content reservation status data D_{RS} (step ST130). As shown in FIG. 12, the content reservation status data D_{RS} represents each DL condition list L_{DL} generated in step S120 and displayed on the side of DTE 1. With this list, the user can easily find the DL condition list L_{DL} meeting his/her needs best. Here, the content reservation status data D_{RS} is generated in such manner that the DTE 1 can generate a content reservation request RS_{TR}, which will be later described, in response to the user's designating DL condition number N_{DL}. Preparing for a case where the user finds no DL condition list L_{DL} matching his/her needs, the content reservation status data D_{RS} is so structured that the user himself/herself can designate the content data CD and time limit LT by operating the DTE 1. This is the end of the processing of step ST1.

Here, assume that the processing unit 61 generates such content reservation status data D_{RS} based on the unit records UR₁₁ to UR₁₃ shown in FIG. 5. In this case, after the DTE 1 executed display processing on the content reservation status data D_{RS}, displayed on a screen of the DTE 1 are three DL condition list L_{DL1} to L_{DL3} as shown in FIG. 12. Here, the DL condition list L_{DL1} for the content data CD_{A} indicates 18:00 on February 17 for the time limit LT, and ¥450 for the transmission expense TC. Here, the DL condition list DL₂ and DL₃ are not described as are similar to the DL condition list DL₁. Note that, the unit records UR₁ exemplified herein do not show the identifier ID_{CD} of β₂, which means the content reservation status data D_{RS} does not include any DL condition list L_{DL} for the content data CD_{B}.

Such content reservation status data D_{RS} is forwarded from the processing unit 61 to the circuit interface 62 to be converted into a format suitable for the first communications circuit 4. Then, the format-converted data D_{RS} is sent out onto the first communications circuit 4. Here, the circuit interface 62 corresponds to a data transmission part in claims. The content reservation status data D_{RS} is received by the circuit interface 33 of the DCE 3 after going through several exchange systems 41 in the first communications circuit 4. By the circuit interface 33, the content reservation status data D_{RS} is converted back into its original format (reconverted) before forwarded to the user interface 32 via the processing unit 31. Then, the user interface 32 converts thus received content reservation status data D_{RS}, before sending cut onto the transmission path 2, into a format suited therefor. The content reservation status data D_{RS} is then received by the DTE 1 (sequence SQ1).

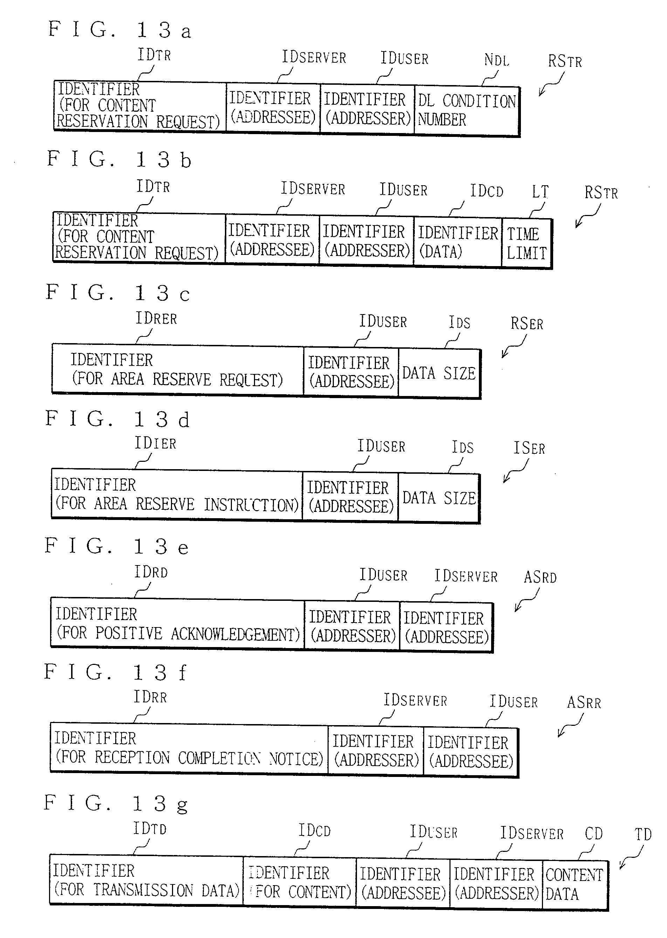

In response to the content reservation status data D_{RS}, the DTE 1 generates a request (step ST2). Specifically, the DTE 1 reconverts the received content reservation status data D_{RS} into its original format, and then displays each of the DL condition list L_{DL}, and the like, on the screen thereof with the output processing executed (see FIG. 12). Thereby, the user can search for any DL condition list L_{DL} whose time limit LT and transmission expense TC meet his/her needs while referring to the reservation status of each content data CD. If found any DL condition list L_{DL}, the user designates the DL condition number N_{DL} thereof. In response, the DTE 1 generates such content reservation request RS_{TR} as shown in FIG. 13a. In FIG. 13a, the content reservation request RS_{TR} is a signal which indicates that the user wants any specific content data CD transmitted for downloading, and includes at least identifier ID_{TR}, identifier ID_{SERVER}, identifier ID_{USER}, and a DL condition number N_{DL}. Here, the identifier ID_{TR} is the one specifying that the signal is a content reservation request RS_{TR}. The identifier ID_{SERVER} specifies which server 6 is the addressee of the content reservation request RS_{TR}, while the identifier ID_{USER} specifies from where the content reservation request RS_{TR} came (i.e., DTE 1). Here, since the DL condition number N_{DL} is the one designated by the user, the server 6 can know which content data CD is requested together with the time limit LT and the transmission expense TC thereof.

In the case that the user finds no DL condition list L_{DL} matching his/her needs, the user operates the DTE 1 to designate any specific content data CD and time limit LT. In response, the DTE 1 generates such content reservation request RS_{TR} as shown in FIG. 13b. Compared with the content reservation request RS_{TR} of FIG. 13a, the content reservation request RS_{TR} of FIG. 13b carries the identifier ID_{CD} and the time limit LT instead of the DL condition number N_{DL}.

Such content reservation request RS_{TR} in the DTE 1 is converted into a format suited for the transmission path 2, and then sent out thereonto to be received by the user interface 32 of the DCE 3 (see FIG. 2). Therein, the content reservation request RS_{TR} is reconverted before forwarded to the circuit interface 33 via the processing unit 31. In the circuit interface 33, the received content reservation request RS_{TR} is converted into a format this time suitable for the first communications circuit 4, and then sent out thereonto. The content reservation request RS_{TR} is then received by the circuit interface 62 of the server 6 (see FIG. 3)(sequence SQ2). Therein, the content reservation request RS_{TR} is reconverted and forwarded to memory (not shown) of the processing unit 61.

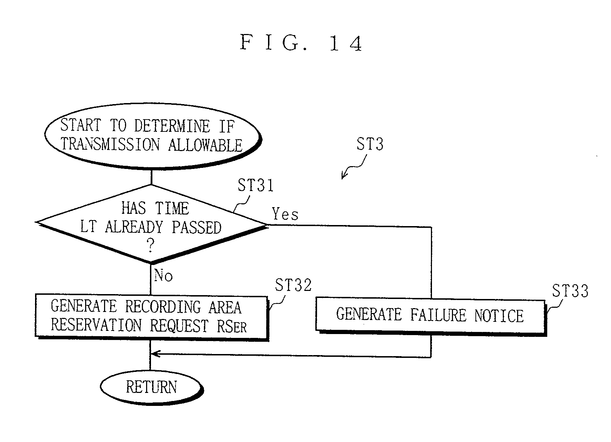

The processing unit 61 checks the identifier ID_{TR} in the stored data to know whether the stored data is the content reservation request RS_{TR}. The processing unit 61 also determines whether or not the time limit LT in the content reservation request RS_{TR} is still valid for transmitting the designated content data CD to the DTE 1 (step ST3). Here, refer to FIG. 14 for the detailed processing procedure of step ST3. In FIG. 14, the processing unit 61 sees whether the time limit LT in the content reservation request RS_{TR} has already passed or not (step ST31). If not yet, the processing unit 61 generates such recording area reserve request RS_{ER} as shown in FIG. 13c (step ST32). In FIG. 13c, the recording area reserve request RS_{ER} is a signal indicating that a recording area in the content storage 35 (see FIG. 2) is requested to be reserved. Here, the recording area reserve request RS_{ER} includes at least identifier ID_{RER}, identifier ID_{USER}, and a data size I_{DS}. The identifier ID_{RER} specifies the received signal as a recording area reserve request RS_{ER}. The identifier ID_{USER} indicates which DCE 3 shall reserve a recording area, and the DCE 3 designated here is the same as the one set in the content reservation request RS_{TR}. The data size I_{DS} shows the content data CD designated by the content reservation request RS_{TR} by size, and is acquired by the processing unit 61 from the content storage 64 by using the identifier ID_{CD}. As for the identifier ID_{CD}, if the content reservation request RS_{TR} is analyzed as being in the format of FIG. 13a, the DL condition number N_{DL} therein is referred to and the corresponding identifier ID_{CD} is extracted from the addressee list L_{DEST} (see FIG. 5). If the content reservation request RS_{TR} is in the format of FIG. 13b, the identifier ID_{CD} is extracted directly therefrom. With such acquired identifier ID_{ER}, identifier ID_{USER}, and data size I_{DS}, the processing unit 61 generates the recording area reserve request RS_{ER}.

The recording area reserve request RS_{ER} is then forwarded from the processing unit 61 to the circuit interface 62, and sent out onto a control channel of the first communications circuit 4 (sequence SQ3). Here, the control channel is the one provided in advance to control the equipment (e.g., exchange system 41, DCE 3) in the first communications circuit 4. Note that, to transmit data lastly received by the DTE 1 such as the content reservation status data D_{RS}, used is not the control channel but a data channel of the first communications circuit 4. The recording area reserve request RS_{ER} goes through several exchange systems 41 before received by any one predetermined exchange system 41. The predetermined exchange system 41 typically is the one located closest to the DCE 3.

In response to the recording area reserve request RS_{ER}, the predetermined exchange system 41 generates a recording area reserve instruction IS_{ER} (step ST4). The recording area reserve instruction IS_{ER} is a signal which instructs the DCE 3 to reserve a recording area, and includes at least, as shown in FIG. 13d, identifier ID_{IER}, identifier ID_{USER}, and a data size I_{DS}. Here, the identifier ID_{USER} and the data size I_{DS} are the same as those in the recording area reserve request RS_{ER} currently received. The identifier ID_{IER} specifies itself as is a recording area reserve instruction IS_{ER}. Thus generated recording area reserve instruction IS_{ER} goes through the predetermined exchange system 41 to the DCE 3, specifically to the circuit interface 33 (see FIG. 2) via the control channel of the first communications circuit 4 (sequence SQ4). Note that, in step ST4, the predetermined exchange system 41 works as a recording area management unit in claims.

With the reconversion processing executed on the recording area reserve instruction IS_{ER}, the circuit interface 33 forwards that to the processing unit 31. In response thereto, the processing unit 31 has the content storage 35 reserved a recording area large enough for the data size I_{DS} designated thereby (step ST5). With the recording area successfully reserved, the processing unit 31 generates a positive acknowledgement AS_{RD}. The positive acknowledgement AS_{RD} is a signal indicating that the recording area has been reserved, and as shown in FIG. 13e, includes at least identifier ID_{RD} for identifying the received signal as a positive acknowledgement AS_{RD}, identifier ID_{USER} for specifying from where the positive acknowledgement AS_{RD} came, and identifier ID_{SERVER} specifying an addressee thereof (i.e., the server 6). Such positive acknowledgement AS_{RD} is sent out onto the control channel of the first communications circuit 4 via the circuit interface 33. Then, the positive acknowledgement AS_{RD} is received by the circuit interface 62 of the server 6 (see FIG. 3) via the first communications circuit 4 (sequence SQ5).

With the reconversion processing executed on the positive acknowledgement AS_{RD}, the circuit interface 62 forwards that to the processing unit 61. In response thereto, the processing unit 61 generates a reception completion notice AS_{RR} (step ST6). The reception completion notice AS_{RR} is a signal notifying the DTE 1 that the content reservation request RS_{TR} has been successfully received, and as shown in FIG. 13f, includes at least identifier ID_{RR}, identifier ID_{USER}, and identifier ID_{SERVER}. The identifier ID_{RR} specifies the received signal as a reception completion notice AS_{RR}. The identifier ID_{USER} specifies which DTE 1 is to receive the reception completion notice AS_{RR}, while the identifier ID_{SERVER} specifies from which serer 6 the reception completion notice AS_{RR} came. Such reception completion notice AS_{RR} is also subjected to the conversion processing by the circuit interface 62 as is the content reservation status data D_{RS}, and then is sent out onto the first communications circuit 4 (sequence SQ6). Then, the reception completion notice AS_{RR} is processed in the same manner as the content reservation status data D_{RS} by the DCE 3, transmitted over the transmission path 2, and then received by the DTE 1.

In response to the reception completion notice AS_{RR}, the DTE 1 carries out reception completion output processing (step ST7). In detail, the DTE 1 shows the user, on the screen, a message telling that the content reservation request RS_{TR} transmitted in step ST2 has been normally processed in steps ST3 and ST6 by the server 6.

If the processing in steps ST3 and ST6 is not normally completed for some reasons, although not shown in FIG. 9, the processing unit 61 generates a failure notice if determined, in step ST31, that the time limit LT of the content reservation request RS_{TR} has already passed (FIG. 14; step ST33). The processing unit 61 generates the failure notice also responding to a negative acknowledgement from the DCE 3. The negative acknowledgement is generated if reservation for the recording area did not work out, and transmitted to the server 6 in the same manner as the positive acknowledgement AS_{RD}. Thus generated failure notice goes through, as the reception completion notice AS_{RR}, the first communications circuit 4, the DCE 3, and the transmission path 2, and then is received by the DTE 1. On reception of the failure notice, the DTE 1 shows the user, on the screen, a message telling that the currently transmitted content reservation request RS_{TR} has failed to be normally processed in steps ST3 and ST6 by the server 6.

Note that, in the above as for sequences SQ1 to SQ6, every downlink signal, which are the content reservation status data D_{RS}, the recording area reserve request RS_{ER}, the recording area reserve instruction IS_{ER}, and the reception completion notice AS_{RR}, is transmitted over the first communications circuit 4. This is not restrictive and the second communications circuit 5 is also a possibility, but the first communications circuit 4 is still preferable here as those downlink signals are not multicast.

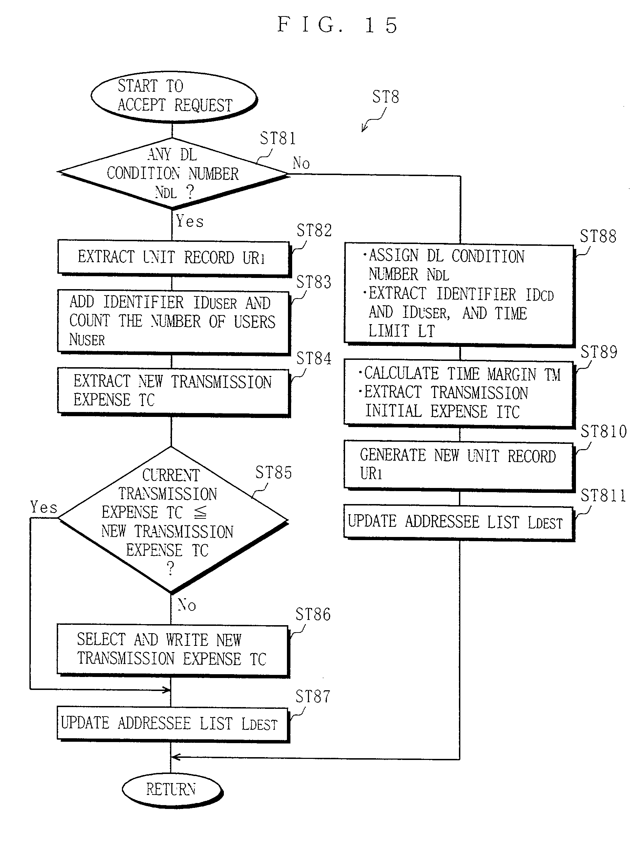

With step ST7 completed, referred to next is FIG. 10 for its sequence chart. In FIG. 10, the processing unit 61 carries out request acceptance processing (step ST8). This step ST8 corresponds to an acceptance processing part in claims, and FIG. 15 shows the detailed processing procedure thereof. In FIG. 15, the processing unit 61 first determines whether the currently received content reservation request RS_{TR} carries any DL condition number N_{DL} (step ST81). If carries (see FIG. 13a) , the processing unit 61 extracts, from the addressee list L_{DEST}, any unit record UR₁ corresponding to the DL condition number N_{DL} on the memory thereof (step ST82). Then, the processing unit 61 extracts identifier ID_{USER} from the content reservation request RS_{TR}, adds thus extracted identifier ID_{USER} to the unit record UR₁ on the memory, and then counts the total number of the identifier ID_{USER} therein (that is, the number of users N_{USER} requesting for the same content data CD)(step ST83).

Then, the processing unit 61 extracts, from the transmission expense list L_{TC} (see FIG. 7), the transmission expense TC corresponding to the counted number of users N_{USER} (step ST84). Here, to avoid confusion, the transmission expense TC found in the unit record UR₁ retrieved in step ST82 is now referred to as current transmission expense TC, while the transmission expense TC found in the transmission expense list L_{TC} in step ST84 is as new transmission expense TC.

The processing unit 61 then compares the new transmission expense TC with the current transmission expense TC to see which is more expensive (step ST85). If the current transmission expense TC is equal to or cheaper than the new, the procedure skips step ST86 and goes to step ST87, otherwise goes through step ST86. That is, if the new transmission expense TC is cheaper than the current, the processing unit 61 considers it good for the user and thus overwrites, with the new transmission expense TC, the current transmission expense TC of the unit record UR₁ on the memory (step ST86). Then, the procedure goes to step ST87. In step ST87, the processing unit 61 stores the unit record UR₁ on the memory in the addressee list storage 65 so as to update the addressee list L_{DEST} therein. After step ST87 is through, the processing unit 61 ends the processing of FIG. 15.

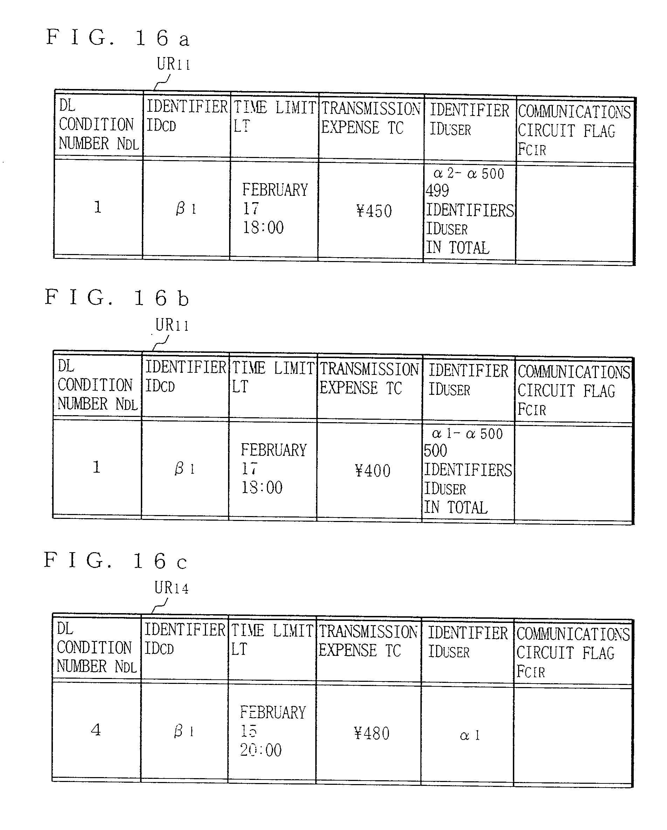

Hereinafter, the update processing (steps ST82 to ST86) executed on the unit record UR₁ is specifically described. Assume that now is the time to start the processing in step ST81, and a content reservation request RS_{TR} currently received shows 1 for the DL condition number N_{DL} and α₁ for the identifier ID_{USER}. Further, extracted in step ST82 is presumably the unit record UR₁₁ shown in FIG. 5. In such case, after step ST83, the unit record UR₁₁ will include α₁ in the identifier ID_{USER} as shown in FIG. 16a, and the number of identifier ID_{USER} becomes 500 in total. Therefore, according to the transmission expense list L_{TC} of FIG. 7, the transmission expense TC of ¥400 is extracted in step ST84. As such, after step ST86, as shown in FIG. 16b, the unit record UR₁₁ shows ¥400 for the transmission expense TC.

As another example, the number of identifier ID_{USER} and the transmission expense TC in the unit record UR₁₁ is presumably 10 and ¥550 when step ST81 is started, but the rest remains the same as above example. In this case, the new transmission expense TC (¥550) shows no change from the current transmission expense TC (¥550). Only a difference herein is α₁ added in the unit record UR₁₁.

As is known from the above, in the request acceptance processing, the more users request for data transmission under the same conditions (e.g., time limit LT, content data CD), the cheaper the transmission expense TC becomes.

In step ST81 of FIG. 15, if the content reservation request RS_{TR} carries no DL condition number N_{DL} (see FIG. 13b), the processing unit 61 generates a new unit record UR₁. For this purpose, the processing unit 61 assigns a unique DL condition number N_{DL} to the to-be-generated new unit record UR₁, and then extracts identifier ID_{CD}, identifier ID_{USER}, and a time limit LT from the content reservation request RS_{TR} (step ST88). The processing unit 61 then calculates a difference, i.e., a time margin TM, between the time limit LT and the current time. Then, the processing unit 61 refers to the initial transmission expense list L_{TC} (FIG. 8) to see which transmission initial expense ITC therein corresponds to the calculated time margin TM (step ST89). Thus found transmission initial expense ITC is extracted and then written into the to-be-generated unit record UR₁. With such extracted information including the DL condition number N_{DL}, identifier ID_{CD}, time limit LT, transmission expense TC, and identifier ID_{USER}, a new unit record UR₁ is generated (step ST810). Then, the processing unit 61 stores thus generated unit record UR₁ in the addressee list storage 65 so as to update the addressee list L_{DEST} therein (step ST811). After step ST87 is through, the processing unit 61 ends the processing of FIG. 15.

Hereinafter, such processing of adding a new unit record UR₁ (steps ST88 to ST811) is specifically described. Assume that now is the time to start the processing in step ST81, and the addressee list L_{DEST} referred to is the one in FIG. 5. Also, the content reservation request RS_{TR} currently received presumably shows β₁ for the identifier ID_{CD}, α₁ for the identifier ID_{USER}, 20:00 on February 15 for the time limit LT, and the current time is 20:00 on February 14. In this case, a time margin TM is 24 hours, and accordingly a transmission initial expense ITC to be retrieved in step ST89 is ¥480. Therefore, after step ST811 is through, the addressee list L_{DEST} additionally includes such new unit record UR₁₄ as shown in FIG. 16c.

As is known from the above, in the processing of adding a new unit record, the longer the time margin TM before the time limit LT in the content reservation request RS_{TR}, the cheaper the transmission initial expense ITC is set. It is understood that the longer time margin TM leads the server 6 to accept the more content reservation requests RS_{TR} requesting for transmission of the same content data CD under the same conditions.

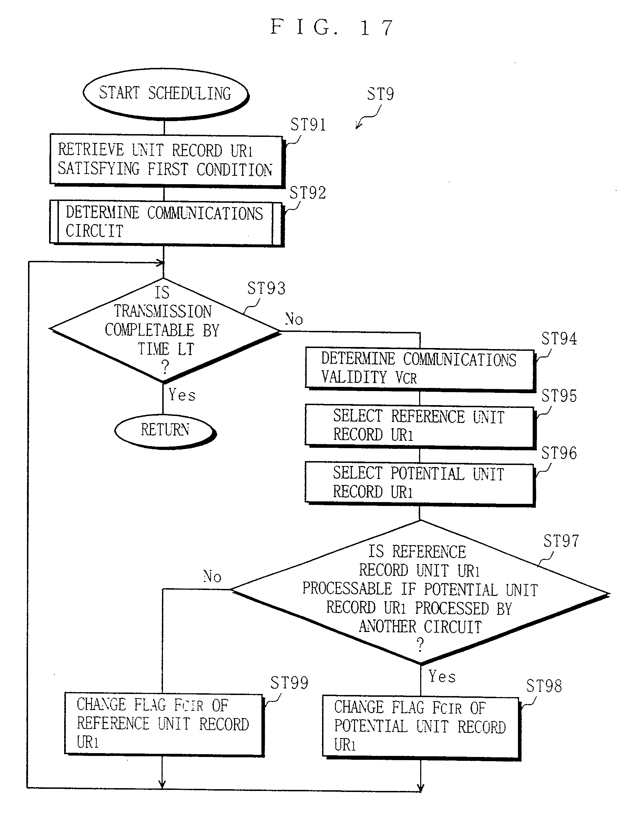

As shown in FIG. 10, the processing unit 61 of the server 6 carries out scheduling to determine a timing for transmitting the content data CD (step ST9). Although such scheduling is presumed here to be carried out only after the addressee list L_{DEST} is updated in step ST8, this is not restrictive and may be carried out also with a predetermined interval . This step ST9 corresponds to a scheduling part in claims, and FIG. 17 shows the detailed processing procedure thereof. In FIG. 17, the processing unit 61 searches the addressee list L_{DEST} (see FIG. 5) for unit records UR₁ satisfying a first condition of "time limit LT - current time < reference time RT" (step ST91). Here, the reference time RT is a predetermined time allowance plus a time which ensures data transmission from the server 6 to the DCE 3 completed by the time limit LT, and is set in advance with consideration for parameters typified by the transmission bandwidth of the first and second communications circuits 4 and 5. Hereinafter, unit records UR₁ satisfying the first condition is referred to as a first group.

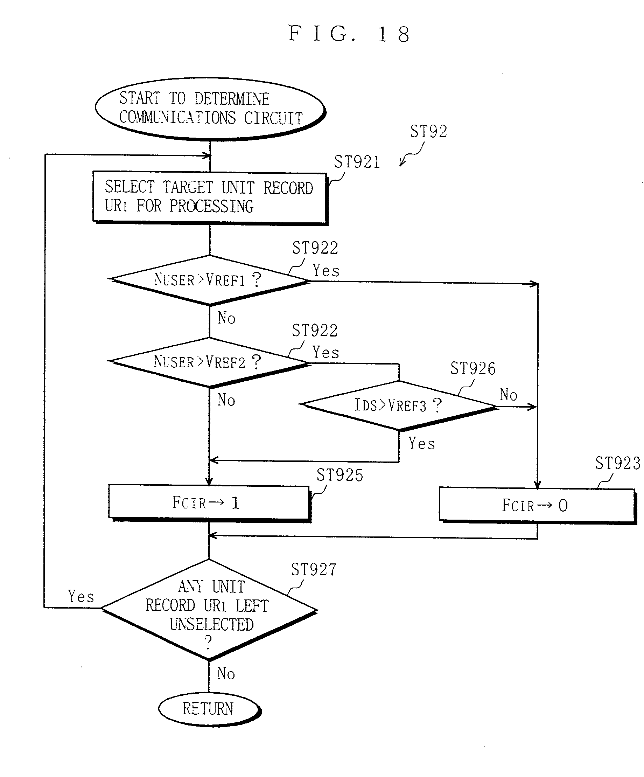

For every unit record UR₁ included in the first group, the processing unit 61 then determines which communications circuit 4 or 5 is used for data transmission (step ST92). See FIG. 18 for the detailed processing procedure thereof. In FIG. 18, the processing unit 61 selects one target unit record UR₁ from the first group (step ST921). Then, the processing unit 61 determines whether the number of users N_{USER} in the selected target unit record UR₁ exceeds a reference value V_{REF1} (step ST922). The reference value V_{REF1} is a threshold for the number of users requesting for downloading the content data CD under the conditions in the unit record UR₁, and is set in advance with consideration for parameters regarding the first and second communications circuits 4 and 5 in terms of transmission bandwidth.

As described above, the second communications circuit 5 (satellite circuit) is suited for multicasting, and when the number of users is quite large for data transmission, the second communications circuit 5 is a better selection in view of the transmission expense. Therefore, when the number of users N_{USER} exceeds the reference value V_{REF1}, the processing unit 61 finds that the second communication circuit 5 is suitable for transmission of the content data CD designated by the target unit record UR₁. For example, assuming that the reference value V_{REF1} is now 499, as exemplified in FIG. 19a, the processing unit 61 sets 0 to the communications circuit flag F_{CIR} in the unit record UR₁ (step ST923).

On the other hand, when the number of users N_{USER} does not exceed the reference value V_{REF1} in step ST922, the processing unit 61 then uses a reference value V_{REF2} to compare with the number of users N_{USER} (step ST924). The reference value V_{REF2} is also a threshold, and is set to be, at least, smaller than the reference value V_{REF1}.

As already described, the first communications circuit 4 (public circuit) is not suited for multicasting, but is better for transmitting the same data to the fewer DTEs 1 (i.e., users) in view of transmission expense per bit. Therefore, when the number of users N_{USER} does not exceed the reference value V_{REF2}, the processing unit 61 finds that the first communication circuit 4 is suitable for transmission of the content data CD designated by the target unit record UR₁. Then, as exemplified in FIG. 19b, the processing unit 61 sets 1 to the communications circuit flag F_{CIR} in the target unit record UR₁ (step ST925).

In the case that the number of users N_{USER} exceeds the reference value V_{REF2} in step ST924, the processing unit 61 then uses a reference size V_{REF3} to compare with the data size I_{DS} of the content data CD retrieved from the content storage 64 (step ST926). The reference size V_{REF3} is a threshold for the size of the content data CD to be transmitted under the conditions in the target unit record UR₁, and is set in advance with consideration for parameters typified by the transmission bandwidth of the first and second communications circuits 4 and 5.

Here, the first communications circuit 4 has wider bandwidth for data transmission than that of the second communications circuit 5. Accordingly, even when the number of users N_{USER} exceeds the reference value V_{REF2}, if the processing unit 61 determines as the data size I_{DS} exceeding the reference size V_{REF3} in step ST926, step ST925 is carried out. Otherwise, the procedure goes to step ST923.

After either step ST923 or ST925 is through, that is, after the communications circuit flag F_{CIR} is set, the processing unit 61 determines if any unit record UR₁ is left yet unselected (step ST927). If determined yes, the procedure repeats step ST921 and onward until no unit record UR₁ is left unselected. If determined no, on the other hand, this is the end of the processing of FIG. 18.

With the processing of FIG. 18 carried out, either the communications circuit 4 or 5 is applied to every unit record UR₁ in the first group. However, as already described, the second communications circuit 5 (satellite circuit) will soon be short of transmission bandwidth if content data CD designated by many unit records UR₁ is transmitted thereover. Therefore, if the number of unit records UR₁ assigned 0 in the communications circuit flag F_{CIR} becomes large in step ST92, the server 6 is placed in a wait state for transmitting the content data CDs of some unit records UR₁, thereby possibly causing those not to be ready in the DCE 3 by their own time limits LT. In order to avoid this, after step ST92 is through, the processing unit 61 determines, for every content data CD designated by each of the unit records UR₁ in the first group, whether transmission thereof can be completed by their own time limits LT (step ST93). In detail, the determination is made, for the unit record UR₁ assigned 1 in the communications circuit flag F_{CIR}, by comparing its time limit LT with a transmission completion time. Here, the transmission completion time from the current time is approximately calculated from the transmission bandwidth of the first communications circuit 4 and the size I_{DS} of the content data CD. For the unit record UR₁ assigned 0 in the communications circuit flag F_{CIR}, the same manner as above is applicable but the transmission bandwidth used for calculation of the transmission completion time is of the second communications circuit 5. With such processing executed, if the processing unit 61 determines every content data CD in the first group as transmittable by their each time limit LT, the processing of FIG. 17 is ended.

On the other hand, if the processing unit 61 determines content data CD designated by at least one unit record UR₁ as nontransmittable by the each time limit LT, calculated is a communications validity V_{CR} for every unit record UR₁ (step ST94). Hereinafter, any unit record UR₁ whose content data CD is determined as nontransmittable by the time limit LT in step ST93 is referred to as nontransmittable unit record UR₁. The communications validity V_{CR} is an indicator used to verify the reliability of the communications circuit selected in step ST92. Here, as is calculated differently for the first and second communications circuit 4 and 5, the communications validity V_{CR} for the first communications circuit 4 is referred to as communications validity V_{CR1} while that for the second communications circuit 5 is as communications validity V_{CR2}. For the unit record UR₁ assigned 1 in the communications circuit flag F_{CIR}, the communications validity V_{CR1} becomes higher as the fewer the number of users N_{USER} in the identifier ID_{USER}, the larger the size I_{DS} of the content data CD, and the longer the time margin TM becomes. For the unit record UR₁ assigned 0 in the communications circuit flag F_{CIR}, conversely, the communications validity V_{CR2} becomes higher as the more the number of users N_{USER} in the identifier ID_{USER}, the smaller the size I_{DS} of the content data CD, and the shorter the time margin TM becomes.

After step ST94 is through, the processing unit 61 searches the nontransmittable unit record(s) UR₁ to find a reference unit record UR₁ showing the closest time limit TM to the current time (step ST95). Then, the processing unit 61 selects a potential unit record UR₁ from among those in the first group except for the nontransmittable unit record(s) UR₁. Here, the potential unit record UR₁ is the one satisfying a second condition of having the closer time margin TM to the current time and the lower communications validity V_{CR} than the reference unit record UR₁, and being assigned the same communications circuit flag F_{CIR} as the reference unit record UR₁ (step ST96).

The processing unit 61 then transmits the content data CD specified by the potential unit record UR₁ over the communications circuit different from the one currently assigned thereto, and sees if the content data CD specified by the reference unit record UR₁ is transmittable by the time limit LT (step ST97). Here, the processing of step ST97 is described in detail. As for the content data CD specified by the potential unit record UR₁, a transmission time from the server 6 to the DCE 3 can be calculated from its data size I_{DS} and the transmission bandwidth of the communications circuit depending on which has been applied thereto. In the same manner as in step ST93, a transmission completion time ET of the reference unit record UR₁, which shows by when the content data CD specified thereby reaches the DCE 3, can be calculated based on the current time. If the transmission time calculated for the potential unit record UR₁ is deducted from thus calculated transmission completion time ET of the reference unit record UR₁, approximated is a new transmission completion time ET for the case that the content data CD specified by the potential unit record UR₁ is transmitted over the communications circuit different from the one currently applied thereto. If thus approximated new transmission completion time ET comes earlier than the time limit LT of the reference unit record UR₁, the processing unit 61 determines the time limit LT of the reference unit record UR₁ as assurable, and thus changes, in value, the communications circuit flag F_{CIR} of the potential unit record UR₁ (step ST98). Conversely, if the new transmission completion time is not earlier than the time limit LT of the reference unit record UR₁, the processing unit 61 changes, in value, the communications circuit flag F_{CIR} of the reference unit record UR₁ (step ST99). After step ST98 or ST99 is through, the procedure returns to step ST93 and repeats the above processing.

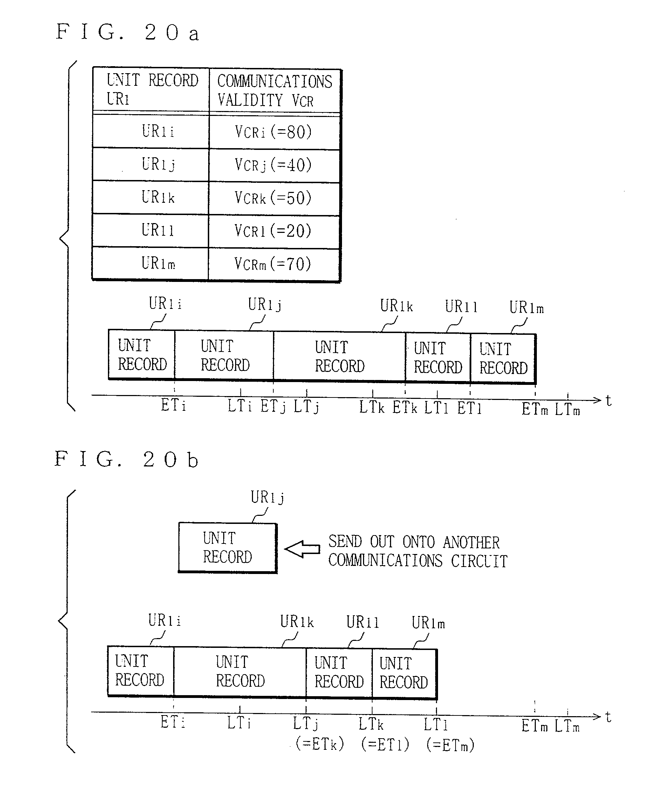

Described next, schematically, is the processing of steps ST94 to ST99 with reference to FIGS. 20a and 20b. In this example, it is assumed that determination made in step ST93 is NO, and 5 unit records UR₁ᵢ, UR₁ⱼ, UR₁ₖ, UR₁ₗ, and UR₁ₘ have the same communications circuit flag F_{CIR} but vary in time limit LT from LTᵢ to LTₘ as shown by the time axis t of FIG. 20a. On the time axis t, content data CDs specified by the unit records UR₁ᵢ to UR₁ₘ, respectively, are also indicated by the transmission completion times ETᵢ to ETₘ. In this case, as is known from the transmission completion times ETₖ and ETₗ located later than the time limits LTₖ and LTₗ, the unit records UR₁ₖ and UR₁ₗ are selected as the nontransmittable unit record UR₁. In FIG. 20a, the unit records UR₁ᵢ to UR₁ₘ are indicated also by the communications validity V_{CR1} to V_{CRm}, respectively.

In this example, selected as the reference unit record UR₁ in step ST95 is the unit record UR₁ₖ, and as the potential unit record UR₁ in step ST96 is the unit record UR₁ⱼ. Then, in step ST97, the content data CD of the unit record UR₁ⱼ is transmitted over the communications circuit different from the one assigned thereto to see whether the time limit LTₖ of the reference unit record UR₁ₖ is assurable. If determined as assurable in step ST98, as shown in FIG. 20b, the communications circuit flag F_{CIR} of the unit record UR₁ⱼ is changed in value for sending out onto the other communications circuit.

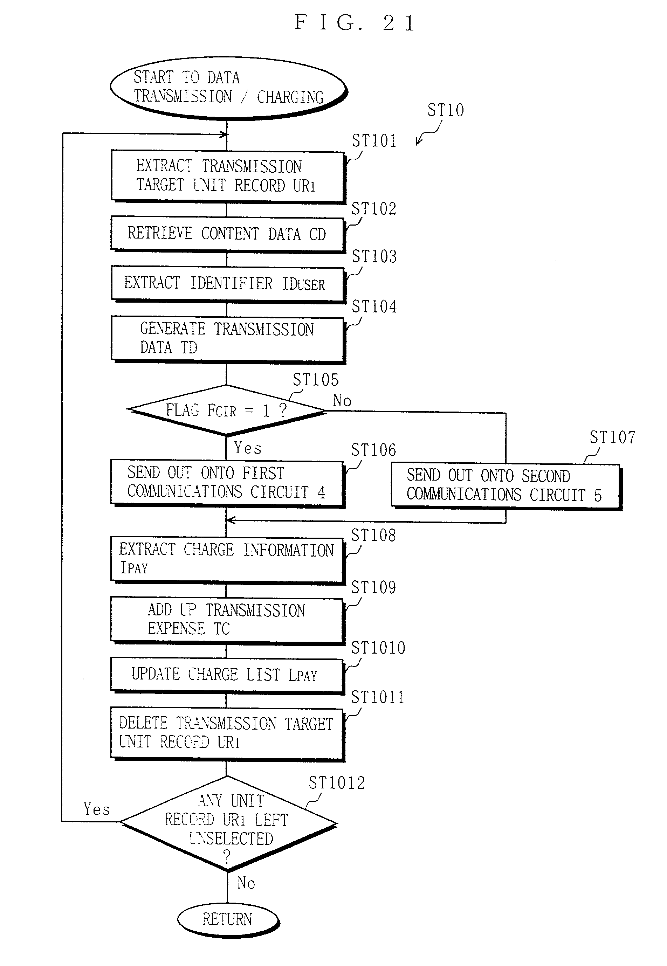

Refer to FIG. 10 again. The processing unit 61 carries out data send-out and charge processing so as to transmit the content data CD to the user and charge therefor (step ST10). Although the data send-cut and charge processing is presumed here to be carried out after scheduling (step ST9), this is not restrictive and may be carried out also with a predetermined interval. This step ST10 corresponds to a data send out part in claims, and FIG. 21 shows the detailed processing procedure thereof. In FIG. 21, the processing unit 61 first refers to the addressee list L_{DEST} to select any one unit record UR₁ to which the communications circuit flag F_{DIR} is set and its time limit LT is closest to the current time (hereinafter, referred to as transmission target unit record UR₁) (step ST101). Then, the processing unit 61 retrieves, from the content storage 64, any content data CD having the same identifier ID_{CD} as in the transmission target unit record UR₁ (step ST102). The processing unit 61 also extracts the identifier ID_{USEF} from the transmission target unit record UR₁ (step ST103).

The processing unit 61 then generates such transmission data TD as shown in FIG. 13g (step ST104). In FIG. 13g, the transmission data TD includes identifier ID_{TD}, identifier ID_{CD}, identifier ID_{USER}, identifier ID_{SERVER}, and content data CD. Here, the identifier ID_{TD} specifies the received signal as the transmission data TD. The identifier ID_{CD} and the identifier ID_{USER} are the ones set in the transmission target unit record UR₁. The identifier ID_{SERVER} specifies from which server 6 the transmission data TD came. The content data CD is the one retrieved in step ST102.

After step ST104 is through, the processing unit 61 checks the communications circuit flag F_{CIR} in the transmission target unit record UR₁ for its value (step ST105). If the communications circuit flag F_{CIR} shows 1, the processing unit 61 forwards the transmission data TD generated in step ST104 to the circuit interface 62 (see FIG. 3). In response, the circuit interface 62 converts thus received transmission data TD into a format suited for the first communications circuit 4 before sending out thereonto as shown by sequence SQ7 of FIG. 11 (step ST106).

On the other hand, if the communications circuit flag F_{CIR} shows 0 in step ST105, the transmission data TD is forwarded to the transmission unit 63. Therein, the transmission data TD is then subjected to the conversion processing before sent out onto the second communications circuit 5 (step ST107). For convenience, such transmission data TD sent out onto the second communications circuit 5 is not shown.

After step ST106 or ST107 is through, the processing unit 61 carries out charge processing. In detail, the processing unit 61 makes an access to the charge list storage 66 (see FIG. 6) to extract, from the charge list L_{PAY} therein, the charge information I_{PAY} each corresponding to the identifier ID_{USER} set in the transmission target unit record UR₁ (step ST108). Then, the processing unit 61 adds, to each of thus retrieved charge information I_{PAY}, the transmission expense TC found in the transmission target unit record UR₁ (step ST109) so that the charge information I_{PAY} is updated. The processing unit 61 then makes an another access to the charge list storage 66 to register thus updated charge information I_{PAY} and the corresponding identifier ID_{USER} in the charge list L_{PAY} (step ST110). In this manner, the user is charged for the currently-received content data CD at the amount written in the transmission expense TC.

After step ST1010 is through, the processing unit 61 deletes the current transmission target unit record UR₁ from the addressee list L_{DEST} (step ST1011), and then sees if any unit record UR₁ is left unselected as the transmission target unit record UR₁ (step ST1012). If any, the procedure returns to step ST101 to repeat the above processing. If none, this is the end of this step ST10.

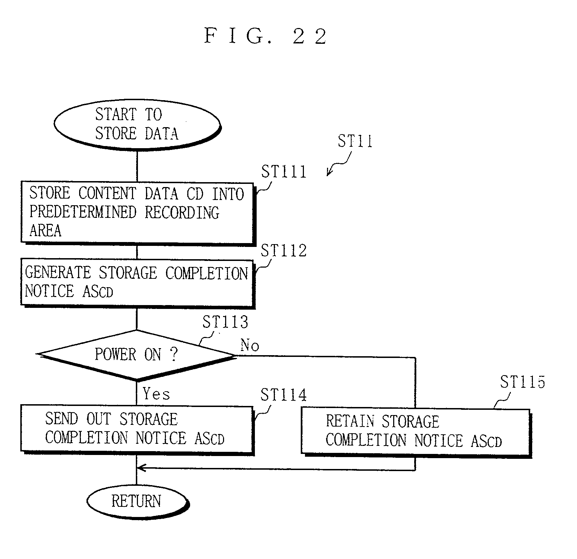

After sending out onto the first communications circuit 4 in step ST106, such transmission data TD goes through several exchange systems 41 before received by the circuit interface 33 of the DCE 3. The circuit interface 33 reconverts the transmission data TD before forwarding that to the processing unit 31. In response, the processing unit 31 carries out data storage processing (step ST11). FIG. 22 shows the detailed processing procedure thereof. In FIG. 22, the processing unit 31 stores at least the identifier ID_{CD} and the content data CD of the received transmission data TD into a predetermined recording area in the content storage 35 (step ST111). Here, the predetermined recording area is the one reserved in step ST5.

Next, the processing unit 31 generates a storage completion notice AS_{CD} (step ST112), which is data indicating that the content data CD requested by the content reservation request RS_{TR} has been stored. Typically, the storage completion notice AS_{CD} is data in the HTML (Hyper Text Markup Language) format or e-mail. Note that, to generate data in the HTML format, the DCE 3 needs to function as a WWW server, and to generate an e-mail, the DCE 3 needs to function as a mail server. In the case that the DCE 3 functions both as the WWW server and mail server, the DCE 3 needs to be set in advance, by the user's operation or by default, in which format such to-be-generated storage completion notice AS_{CD} is transmitted.

After step ST112, the processing unit 31 checks whether the DTE 1 is ON (step ST113), and if ON, forwards the generated storage completion notice AS_{CD} to the user interface 32. The user interface 32 then converts the storage completion notice AS_{CD} into a format suited for the transmission path 2 before sending out thereonto (step ST114). The storage completion notice AS_{CD} is thus received by the DTE 1 (sequence SQ8).

It should be noted that, if step ST107 is carried out, the transmission data TD is transmitted over the second communications circuit 5. In detail, the server 6 notifies a predetermined multicast address to the DCE 3, which is to receive the current transmission data TD. Then, the server 6 generates the transmission data TD having the multicast address set as the identifier ID_{USER} therein (see FIG. 13g). Such transmission data TD goes through, from the transmission unit 63 of the server 6, the transmission antenna 51, the artificial satellite 52, and the reception antenna 53, and then received by the reception unit 34 of the DCE 3, which has been notified of the multicast address in advance. If this is the case, the reception unit 34 is the one which subjects the reconversion processing to the transmission data TD before forwarding that to the processing unit 31. Then, responding to the transmission data TD, the processing unit 31 carries out the data storage processing in the same manner as above but only if the transmission data TD carries the notified multicast address. If the transmission data TD carries some other identifier ID_{USER}, the processing unit 31 needs to discard the transmission data TD. This is because, once sent out onto the second communications circuit 5, the transmission data TD reaches every DCE 3 in the data transmission system.

On reception of the storage completion notice AS_{CD}, the DTE 1 shows the user a message telling that the content data CD at his/her request has been stored (step ST12). The user thus knows the content data CD having reached the DCE 3. The user operates the DTE 1, whenever convenient, to designate the content data CD stored in the DCE 3. In response, the DTE 1 generates a read request RS_{RO} (step ST13), which is a signal which requests the DCE 3 to read the user designated content data CD from the content storage 35.

The read request RS_{RO} is converted by the DTE 1 into a format suited for the transmission path 2, sent out thereonto, received by the user interface 32 of the DCE 3 (see FIG. 2), reconverted therein, and then forwarded to the processing unit 31 (sequence SQ9). On reception of the read request RD_{RO}, the processing unit 31 reads the currently designated content data CD from the content storage 35 and forwards that to the user interface 32. The content data CD is converted therein and sent out onto the transmission path 2, and thus received by the DTE 1 (step ST14) (sequence SQ10). The DTE 1 reconverts the content data CD, and then carries out the output processing thereon to present the user what the content data CD carries (step ST15).

Here, in ST113 of FIG. 22, if the processing unit 31 determines the DTE 1 as OFF, the storage completion notice AS_{CD} is retained therein until the DTE 1 is turned ON (step ST115). Once detected the DTE 1 was turned ON, the processing unit 31 forwards the retained storage completion notice AS_{CD} to the user interface 32 and then to the DTE 1 via the transmission path 2. Thereafter, the processing of steps ST12 to ST15 is carried out between the DTE 1 and the DCE 3.

As described in the foregoing, in the data transmission system of the first embodiment, the server 6 can selectively send out transmission data TD onto the communications circuits 4 and 5 in consideration of their suitability for multicasting. Accordingly, when many users are requesting for the same content data CD, the server 6 basically selects the second communications circuit 5, which is suited for multicasting. Thus, the data transmission can be done with less transmission expense, which is good for users. As such, according to the first embodiment, the present data transmission system is more advantageous, in view of cost performance to the conventional.

By the way, Japanese Patent Laid-Open Publication NO. 10-41976 (98-41976) discloses a method for selecting one communications circuit from among those connecting several terminals depending on the size of transmitting data. Here, if this method is combined with the data transmission system of Japanese Patent Laid-Open Publication No. 8-140081 (96-140081) referred to in the Prior Art (hereinafter, conventional data transmission system), a dispute may arise about the difference from the data transmission system of the first embodiment. With such combination, however, efficient use of the communications circuits cannot be achieved unlike the data transmission system of the first embodiment. This is because, with the combination, first determined is a time when to transmit the data, and followed is which communications circuit to use therefor. Under such control, no consideration is given to suitability of the communications circuits. Thus, it may happen that first data which is not so popular among users is transmitted over a communications circuit suitable for multicasting, and in the meantime, even if second data which is quite popular needs to be transmitted, the communications circuit is not available therefor. As a result, the second data has to be transmitted over another communications circuit which is not suited for multicasting.

On the other hand, to determine a time when to transmit transmission data TD and which communications circuit to use therefor, the data transmission system of the first embodiment carries out scheduling (step ST9; specifically, steps ST921 to ST926) while referring to a time limit LT and communications information (e.g., the state of the communications circuits 4 and 5, the number of users N_{USER}, the data size I_{DS}) of every unit record UR₁ satisfying the first condition. Further, to avoid such problem as in the above combination, the present data transmission system uses a communications validity V_{CR} to verify the reliability of the selected communications circuit (see steps ST94 to ST99). In this manner, the present data transmission system achieves efficient use of the communications circuits 4 and 5, that is, controls communications traffic, while ensuring the user designated time limit LT.

Further, according to the first embodiment, the server 6 uses content reservation status data D_{RS} to show the user what are the conditions for downloading his/her requesting content data CD and how many other users are so far requesting the content data CD. The content reservation status data D_{RS} is also utilized for inducing some more users by showing what content data CD is available under what conditions. Once the user found any condition matching his/her needs, the DTE 1 generates and transmits a content reservation request RS_{TR} including a DL condition number N_{DL} corresponding to the conditions. On reception thereof, the server 6 updates the corresponding unit record UR₁ so that the transmission expense TC of the content data CD is accordingly reduced. As such, the user can acquire the content data CD with less expense if her/his request is transmitted together with some other users'.

Even if the user finds no conditions matching his/her needs, the user can designate his/her own conditions. In this case, the later his/her designated time limit LT shows, the cheaper his/her expense for the content data CD becomes.

Note that, in the first embodiment, the conditions for downloading the content data CD is exemplified by the time limit LT. This is not restrictive, and the transmission expense TC and the number of users N_{USER} may be also included. With the transmission expense TC, the procedure goes to step ST92 when the transmission expense TC in every unit record UR₁ satisfying the first condition becomes a predetermined value or lower in step ST91 in the scheduling processing of FIG. 17. With the number of users N_{USER}, on the other hand, the procedure goes to step ST92 when the number of users N_{USER} in every unit record UR₁ satisfying the first condition becomes a predetermined value or more in step ST91.

Further, in the first embodiment, when the incoming content reservation request RS_{TR} is in such form as FIG. 13b, the procedure goes through steps ST88 to ST811 of FIG. 15, and the processing unit 61 thus generates a new unit record UR₁ for addition to the addressee list L_{DEST}. However, if the addressee list L_{DEST} already carries any unit record UR₁ which satisfies a third condition, this is not restrictive. Here, the unit record UR₁ satisfying the third condition is the one having the earlier time limit LT and the cheaper transmission expense TC than the new unit record UR₁, and showing the same content data CD as the new unit record UR₁. If such unit record UR₁ is found in the addressee list L_{DEST}, the identifier ID_{USER} of the new unit record UR₁ is written thereinto, and the transmission expense TC in the list is accordingly updated. In this manner, as far as the content data CD becomes ready in the DCE 3 sooner than the user designated time limit LT, the user settles for nothing, and if anything, has merits of less expense.

Here, the processing unit 61 may carry out the same processing as above when, in the addressee list L_{DEST}, one unit record UR₁ shows the cheapest transmission expense TC and the earliest time limit LT among those all corresponding to the same content data CD.

Further, in the first embodiment, the DCE 3 is exemplified as simply transmitting the content data CD to the DTE 1 in response to a read request RS_{RO} therefrom. This is not restrictive, and the processing unit 31 of the DCE 3 may delete the content data CD from the content storage 35 immediately after the transmission or after a predetermined time interval. Or, even if no read request RS_{RO} comes from the DTE 1, the processing unit 31 may store the content data CD in the content storage 35, and then delete the content data CD after a predetermined time interval. If those are the cases, the timing of deletion is added to the transmission data TD before transmitted to the DCE 3 or previously registered in the DCE 3.

In the first embodiment, as shown by sequence SQ8 of FIG. 10, a storage completion notice AS_{CD} is exemplified as transmitted to the DTE 1 from the DCE 3. This is not restrictive, and the server 6 may perform the transmission after received the transmission data TD.

Also in the first embodiment, as shown by sequence SQ1 of FIG. 9, the content reservation status data D_{RS} is exemplified as transmitted to the DTE 1 via the DCE 3. This is not restrictive, and the DTE 1 may directly transmit the content reservation status data D_{RS} responding to the user's operation. In this case, the user refers to the content reservation status data D_{RS} on the DTE 1 which is not connected to the DCE 3. Note that, the content reservation request RSTR still needs to carry the identifier ID_{USER} of the DCE 3 as the content data CD is stored in the DCE 3.

Also in the first embodiment, the server 6 is exemplified as including the addressee list storage 65, the charge list storage 66, the transmission expense list storage 67, and the transmission initial expense list storage 68. This is not restrictive, and the server 6 may be simply in charge of generation and transmission of the content reservation status data D_{RS} and transmission of the content data CD, and leave other processing to other equipment in the data network 7 or to some other server connected thereto.

Also, the DCE 3 may be configured as connectable also to a telephone and/or facsimile. If connected, information such as service class comes over the first communication circuit 4, for example, together with audio data for telephone and/or character data for facsimile. Thus, the DCE 3 refers to such information and forwards the audio data and/or character data to the telephone and/or facsimile, respectively, prior to the transmission data TD and content reservation status data D_{RS}. This is because such data needs to be responded in real time.

Also in the first embodiment, the timing of transmission is exemplified as determined for every unit record UR₁ in order of increasing time limit LT. This is not restrictive, and determined may be the transmission time. In such case also, the transmission time has to ensure the time limit LT.

Further, in the first embodiment, the content data CD is exemplified as stored in the content storage 64 together with the identifier ID_{CD} and the data size I_{DS} added thereto for clarity. This is not restrictive, and the content storage 64 stores only the content data CD, and assigns the identifier ID_{CD} unique thereto when the processing unit 61 generates the transmission data TD.

Also in the first embodiment, transmitted from the DCE 3 to the DTE 1 is one content data CD. The number of content data CD is not restrictive, and the content data CD designated by read request RS_{RO} may be transmitted together with any other which is not designated thereby. If this is the case, the applicability is accordingly widened. For example, assume that a read request RD_{RO} is made for content data CD which is a movie. In response thereto, the DCE 3 may transmit, to the DTE 1, thus requested content data CD together with other content data CD which is an advertisement. Accordingly, the DTE 1 can display both the movie and advertisement on its screen.

Also in the first embodiment, the content data CD is exemplified as carrying moving picture data, static picture data, audio data, object data, character data, or a combination of two or more of such data. This is not restrictive, and the content data CD may also carry a program which changes the contents thereof (e.g., characters) for display. For example, when a program instructs the DTE 1 to display a letter of "A" in a first period but a letter of "B" in a second, the DTE 1 follows such instruction.

As another example, assume that a read request RD_{RO} is made for the content data CD which is a WEB page. In response thereto, the DCE 3 may transmit, to the DTE 1, thus requested content data CD together with other content data CD which is a banner advertisement (or information link to advertisement), which is not requested by the user. Accordingly, the DTE 1 can display both the WEB page and banner advertisement on its screen, leading to advertisement revenue for information providers.

Also in the first embodiment, the content data CD is exemplified as being chargeable. However, there may be free content data. For any server containing only such free content data in the data transmission system, there needs only to transmit free content data to the DTE 1 via the DCE 3, if requested, without going through such processing as scheduling and charging in the first embodiment. In such case, the DCE 3 counts how often the DTE 1 has requested the same free content data so far. As for any free content data which is popular among users, the DCE 3 inquires, during when communications traffic of the first communications circuit 4 is low, the server if the content data has been updated. If updated, the server responsively transmits the latest version of the content data CD to the DCE 3. The DCE 3 then stores thus received content data CD in the content storage 35. As such, the DCE 3 may carry out cache processing to acquire any new free content data, autonomously, irrespective of a transmission request comes from the DTE 1. Unlike the DTE 1 which is basically turned ON and OFF by the user, the DCE 3 is always ON. This is the reason why the DCE 3 can carry out such cache processing spontaneously.

In the above cache processing, the DCE 3 can know the level of the communications traffic with the following three techniques. First, the DCE 3 inquires any one exchange system 41 in the first communications circuit 4 about the current traffic level, and then uses a predetermined reference value for comparison therewith. Second, any one exchange system 41 notifies the DCE 3 about the current traffic level, and the DCE 3 then uses the reference value for comparison. Lastly, third, DCE 3 is provided with a timer, and carries out the cache processing when the timer indicates a predetermined time. The time may be in a period during from late-night to early-morning, when the communications traffic is lowered on the first communications circuit 4.

For the cache processing, the recording area in the content storage 35 is preferably divided into smaller areas. Some smaller areas are allocated for storing chargeable content data CDs, and some for free content data acquired by the DCE3 through the cache processing. This prevents the recording area from being wholly occupied by the free content data after the cache processing.

If received the transmission request from the DTE 1, the DCE 3 checks to see whether the content data CD designated thereby is stored in any of those smaller areas. If stored, the DCE 3 reads the content data therefrom without accessing to the server, and transmits that to the DTE 1. Such cache processing allows the DTE 1 to quickly acquire the content data at the user's request. Also, since the cache processing is carried out when the communication traffic level is low, the communications traffic can be controlled on the basis of time, thereby improving the first communications circuit 4 in transmission efficiency.

In the first embodiment, the DCE 3 is exemplified as acquiring the chargeable content data CD from the server 6. This is not restrictive, and the DCE 3 may carry out processing to share the free content data with other DCEs 3. In the process, the DCE 3 (the one which receives data) inquires other DCEs about the content data (especially the popular one) . Those inquired DCEs 3 responsively check themselves if carrying the content data, and if any of those carries, the content data is transmitted therefrom to the inquiring DCE 3.

Alternatively, the server manages information, in the form of a list, which DCE 3 in the data transmission system carries what content data, and transmits the list to the DCE 3 which is looking for any specific content data. With the help of such list, the content data can be quickly located and acquired only by data communications between two DCEs 3.

By sharing the content data among many DCEs as such, server access is reduced, and further, the content data becomes quickly available if located in the closer DCE 3.

In the case that the DCE 3 wants to acquire a content data CD but is in short of the recording area in the content storage thereof, the DCE 3 asks for any other DCE 3 to store the content data CD therein. If accepted, the content data CD is stored in the other DCE 3 until the DCE 3 finds any room therefor in its recording area. Then, the DCE 3 communicates with the other DCE 3 to acquire the content data CD therefrom.

Here, the DCE 3 may be implemented with SMTP (Simple Mail Transfer Protocol) and POP (Post Office Protocol) to function as a mail server. If this is the case, as in the above, e-mails are preferably distributed when the communications traffic on the first communications circuit 4 is low. As to a high priority e-mail, however, the DCE 3 preferably distributes that regardless of the communications traffic. Here, as is powered ON all the time, the DCE 3 always receive e-mails. The DTE 1 thus carries out an e-mail program, and accesses the DCE 3 responding to the user's operation to receive e-mails. It means, the DTE 1 receives e-mails from the DCE 3 in close proximity thereto without via the first communications circuit 4, and whereby those e-mails become available for the user sooner.

The DCE 3 may also be implemented with a program to realize a fire wall, which prevents malicious hackers from breaking into the DCE 3 and DTE 1. More specifically, the DCE 3 carries a list indicating qualified data addresser and addressee, and if any data comes from those not listed, discards the data. The DCE 3 also discards data addressed to an addressee not found in the list. Accordingly, the DTE 1 can be protected from so-called spam. For a case where a child operates the DTE 1, the list may be password protected to prevent the DTE 1 from receiving content data including sex and violence descriptions. Further, the DCE 3 detects unauthorized data typified by virus in data transmitted from/received by the circuit interface 33. Those detected are discarded with no exception, whereby the DTE 1 can be protected from virus infection.

Also in the first embodiment, the DCE 3 responds to a read request RS_{RO} from the DTE 1, and transmits a content data CD itself to the DTE 1. Here, if functions as a WWW server, the DCE 3 assigns the content data CD a URL (Uniform Resource Locator) , and stores that in the content storage 35. Also, the DCE 3 generates in advance an HTML file including a simple description of the assigned URL and the content data CD. Accordingly, the user can refer to any content data CD not only via the DTE 1 connected to the DCE 3 through the transmission path 2 but via other equipment (e.g., personal computer, cellular phone, information mobile terminal) having a WWW browser implemented therein. The same is applicable if the DCE 3 generates an e-mail including a simple description of the assigned URL and the content data CD, and transmits the e-mail with a preassigned e-mail address. Here, whether generating the HTML file or e-mail may be up to the user on the content data CD basis.

Described next is a data transmission system of a second embodiment of the present invention. Basically, the data transmission systems of the first and second embodiments are structurally the same as shown in FIG. 1, and herein, any component new in the second embodiment is described in detail but otherwise provided with the same reference numeral as in the first embodiment and not described again.

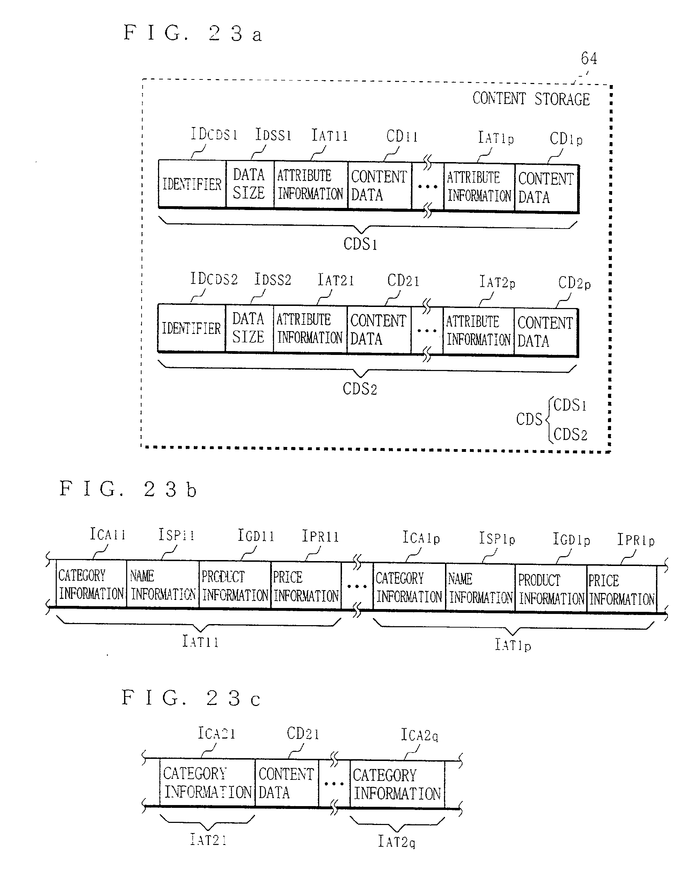

Described first is the server 6, whose structure is shown in FIG. 3. However, here, stored in the content storage 64 is not the content data CD but, as shown in FIG. 23a, several content data CD sets CDS. In FIG. 23a, each content data set CDS includes identifier ID_{CDS}, data size I_{DSS}, and several combinations of attribute information I_{AT} and corresponding content data CD. The identifier ID_{CDS} uniquely specifies the location where the content data set CDS is stored (i.e., the recording area in the content storage 64 of the server 6) in the data transmission system. The data size I_{DSS} indicates the content data set CDS by size, and the attribute information I_{AT} indicates the corresponding content data CD by attribute. About the content data CD, no mention is given here as is the same in the first embodiment. Here, the content data set CDS may include the identifier ID_{CD} and the data size I_{DS} for the corresponding content data CD as in the first embodiment, but this is not essential here and neither described nor shown.

The content data set CDS is specifically described next. In this embodiment, the content storage 64 stores content data sets CDS₁ and CDS₂. The content data CDS₁ is presumably an advertisement made by a shop or a company, and carries p (a natural number equal to or larger than 1) content data CD₁₁ to CD₁ₚ each varying in content. The content data CD₁₁ is provided with attribute information I_{AT11} corresponding thereto. Similarly to other content data CD₁₂ to CD₁ₚ, attribute information I_{AT12} to I_{AT1p} is respectively provided.

The attribute information I_{AT11} indicates the content data CD₁₁ by attribute. Specifically, as shown by FIG. 23b, the attribute information I_{AT11} is composed of category information I_{CA11}, name information I_{SP11}, product information I_{GD11}, and price information I_{PR11}. The category information I_{CA11} indicates the advertisement specified by the corresponding content data CD₁₁ by category, i.e., the advertiser's business. The name information I_{SP11} indicates the advertiser by shop or company name, the product information I_{GD11} indicates the product or service in the advertisement, and the price information indicates the price of the product or service. Note that, the attribute information I_{AT11} is not limited only to such category, name, product, and price, and may also include information indicating the number of stocks of the product. Similar to the attribute information I_{AT11}, other attribute information I_{AT12} to I_{AT1p} is composed of, respectively, the category information I_{CA11} to I_{CA1p}, the name information I_{SP11} to I_{SP1p}, the product information I_{GD11} to I_{GD1p}, and the price information I_{PR11} to I_{PR1p}.

Next, the content data set CDS₂ is herein presumably news, and carries q (a natural number equal to or larger than 1) content data CD₂₁ to CD_{2q} each varying in content. The content data CD₂₁ is provided with attribute information I_{AT21} corresponding thereto. Similarly to other content data CD₂₂ to CD_{2q}, attribute information I_{AT22} to I_{AT2q} is respectively provided. The attribute information I_{AT21} to I_{AT2q} indicates the corresponding content data CD₂₁ to CD_{2q} by attribute, and as shown in FIG. 23c, specifically composed of the category information I_{CA21} to I_{CA2q} each varying in content depending on the corresponding content data CD₂₁ to CD_{2q}. For example, the category information I_{CA21} to I_{CA2q} for the content data CDS₂ may be entertainment, finance, sports, and the like.

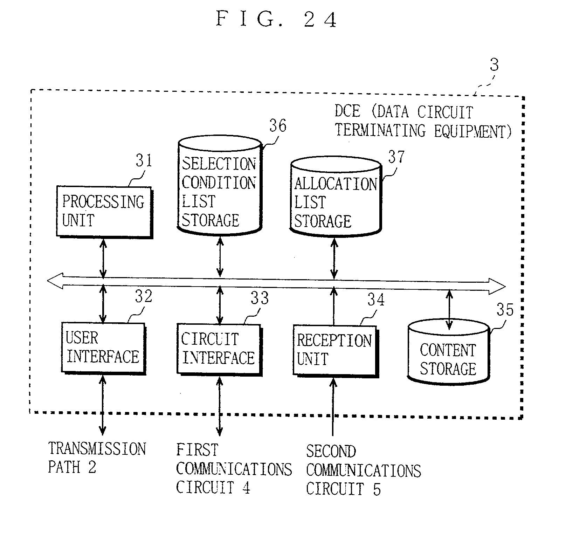

Described next is the DCE 3. As shown in FIG. 24, differences between this DCE 3 and that (see FIG. 2) in the first embodiment are a selection condition list storage 36 and an allocation list storage 37. The selection condition list storage 36 and the allocation list storage 37 store, respectively, a selection condition list L_{SC} and an allocation list L_{ST} (both will be described later).

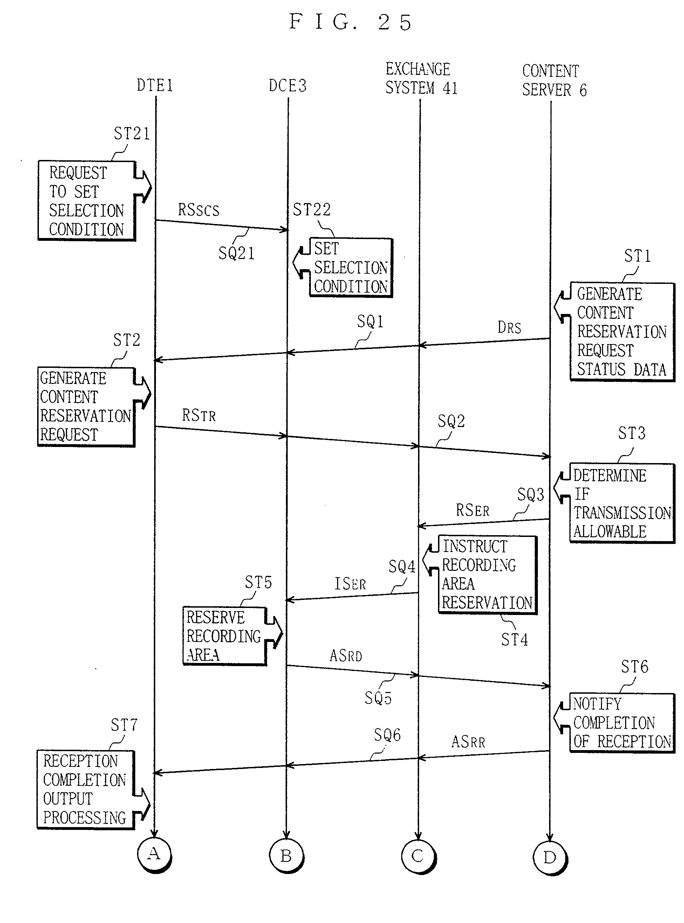

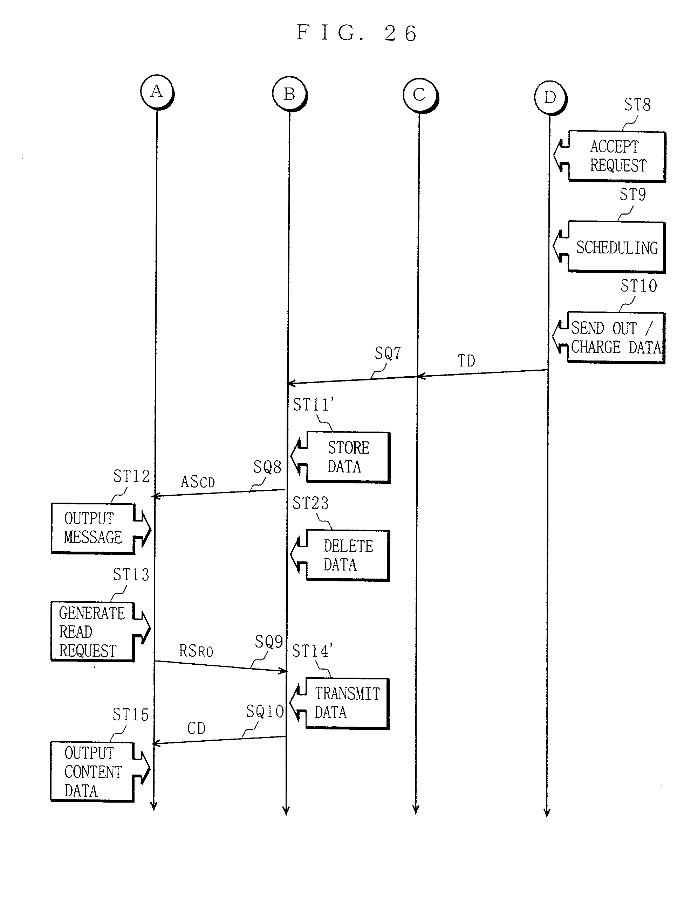

Described next is the communications procedure for the DTE 1 to acquire a content data CD in the above structured data transmission system with reference to the sequence charts of FIG. 25 and 26. The sequence chart of FIG. 25, compared with that of FIG. 9, additionally includes steps ST21 and ST22, and sequence SQ21. The rest is basically the same as FIG. 9, and thus steps and sequences same as those in FIG. 9 are denoted by the same step and sequence numbers, and described herein is only a difference if any. As for the sequence chart of FIG. 26, compared with that of FIG. 10, steps ST11 and ST14 are replaced by steps ST11' and ST14', and additionally includes ST23. The rest is basically the same as FIG. 10, and thus steps and sequences same as those in FIG. 10 are denoted by the same step and reference numbers, and described herein is only a difference if any.

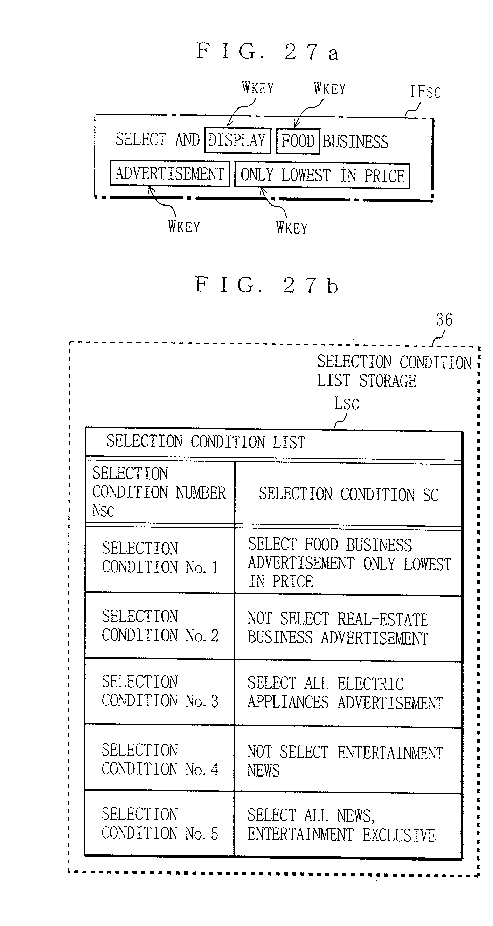

First, in FIG. 25, the DTE 1 carries out selection condition setting request processing according to the user's operation (step ST21). More specifically, as shown in FIG. 27a, the DTE 1 displays a selection condition input form IF_{SC}. The user operates the DTE 1 to input several keywords W_{KEY} into the selection condition input form IF_{SC}. Here, the keywords W_{KEY} are the ones used to define the content data CD by attribute. For example, if the user wants to see food advertisements carrying the lowest price, the user inputs the corresponding keywords W_{KEY} into the selection condition input form IF_{FS} to define what he/she wants. In response, the DTE 1 generates a selection condition setting request RS_{SCS}, which is a signal requesting the DCE3 to set a selection condition(s) SC therein to forward only content data CDs matching the user's preferences. The signal includes at least the identifier ID_{SCS} and the inputted keywords W_{KEY}, and the identifier ID_{SCS} therein specifies the signal as being a selection condition setting request RD_{SCS}. With the signal, the DCE 3 can grasp the user's preferences for the content data CDs.

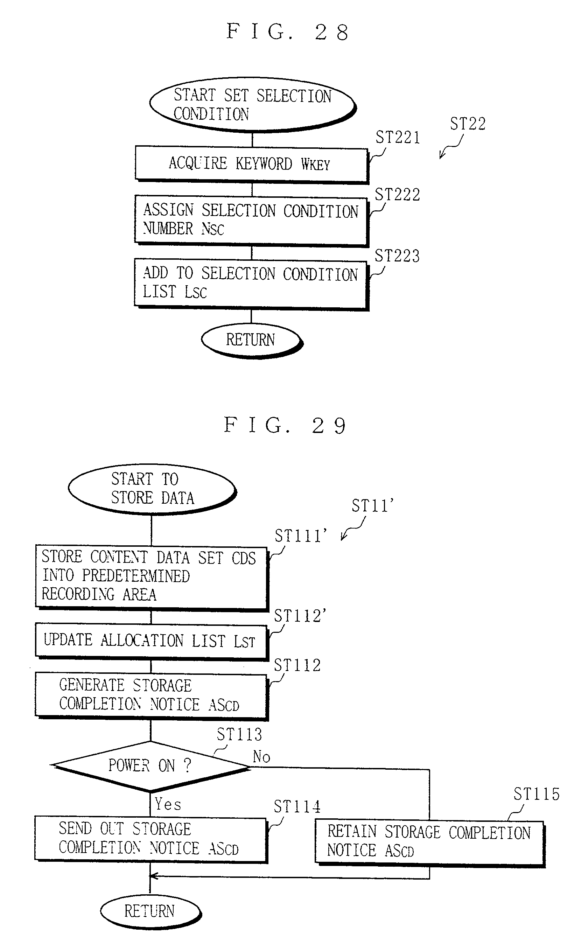

Such selection condition setting request RS_{SCS} is converted into a format suited for the transmission path 2 by the DTE 1, sent out thereonto, and received by the user interface 32 of the DCE 3 (see FIG. 2) (sequence SQ21). Then, in the user interface 32, the selection condition setting request RS_{SCS} is reconverted before received by the processing unit 31. The processing unit 31 then checks the identifier ID_{SCS} in the received signal to see if the signal is a selection condition setting request RS_{SCS}. If it is, the processing unit 31 carries out the selection condition setting request processing (step ST22). FIG. 28 shows the detailed processing procedure of step ST22. In FIG. 28, the processing unit 31 extracts the keywords W_{KEY} from the received selection condition setting request RS_{SCS} (step ST221). Then, the processing unit 31 assigns a unique selection condition number N_{SC} to a selection condition SC structured by the retrieved keywords W_{KEY} (step ST222). The processing unit 31 then accesses the selection condition list storage 36, and to such selection condition list L_{SC} therein as shown in FIG. 27b, adds the current set of the selection condition number N_{SC} and the selection condition SC (step ST223). In such form of the selection condition list L_{SC}, the user designated selection condition(s) SC are set to the DCE 3.

After such selection condition setting is through, carried out in the data transmission system are the same communications and processing as in the first embodiment, that is, steps ST1 to ST10, and sequences SQ1 to SQ7 (see FIGS. 9 and 10). Note that, although the processing was performed on the content data CD basis in steps ST1 to ST10 in the first embodiment, the processing in this embodiment is on the content data set CDS basis. In brief the DTE 1 transmits a content reservation request RS_{TR} to the server 6 to ask for transmission of a content data set CDS. In response, with respect to the requested content data set CDS, the server 6 carries out processing including scheduling, data transmission, charging, and the like. As a result, compared with the transmission data TD of FIG. 13g, the transmission data TD transmitted in sequence SQ7 herein includes the identifier ID_{CDS} and the content data set CDS instead of the identifier ID_{CD} and the content data CD.

As in the first embodiment, the transmission data TD is sent out onto an optimal communications circuit (the first or the second communications circuit 4 or 5). Herein, the optimal is presumed to be the first communications circuit 4. The transmission data TD on the first communications circuit 4 is received by the circuit interface 33 of the DCE 3 via several exchange systems 41, and then forwarded to the processing unit 31. Upon reception of the transmission data TD, the processing unit 31 carries out data storage processing (step ST11'). FIG. 29 shows the detailed processing procedure of step ST11'. Compared with FIG. 22, step ST111 is replaced by steps ST111' and ST112' in FIG. 29. Other steps identical to those in FIG. 22 are denoted by the same step numbers, and not described again. In FIG. 29, out of the received transmission data TD, the processing unit 31 stores at least the content data set CDS into a predetermined recording area of the content storage 35 (step ST111'). Here, the predetermined recording area is the one reserved in step ST5.

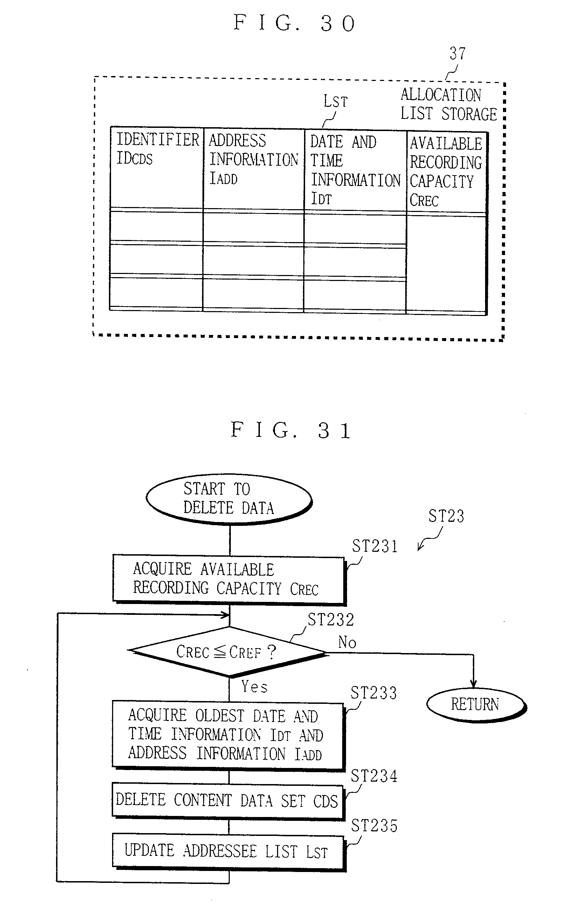

Next, the processing unit 31 carries out update processing on the allocation list L_{ST} (step ST112'). More specifically, as for every content data CD currently stored in the content storage 35, the processing unit 31 adds, to such allocation list L_{ST} as shown in FIG. 30, identifier ID_{CDS} of the content data set CDS, address information I_{ADD} specifying the location of the content data CD in the recording area, and date and time information I_{DT} when the content data CD was stored (i.e., current date and time) . The allocation list LST has also a section for a recording capacity C_{REC}, which indicates a current available capacity of recording area of the content storage 35. Thus, with the content data set CDS stored in the content data storage 35 in step ST111', the processing unit 31 writes the resultant value into the recording capacity C_{REC}. After step ST112' is through, the procedure goes to steps ST112 and onwards, and the processing unit 31 transmits a storage completion notice AS_{CD} to the DTE 1 (sequence SQ8).

After step ST12 is through, the storage capacity C_{REC} of the content storage 35 is decreased in value. Thus, the processing unit 31 carries out data deletion processing (step ST23). Here, this step ST23 corresponds to a data deletion part in claims, and FIG. 31 shows the detailed processing procedure thereof. In FIG. 31, the processing unit 31 extracts the current recording capacity C_{REC} from the allocation list L_{ST} (step ST231), and then measures its level by comparing with a reference recording capacity C_{REF} (step ST232).

If the reference recording capacity C_{REF} is not less than the current recording capacity C_{REC}, the processing unit 31 determines the recording area of the content storage 35 as being still sufficiently available for recording a new content data CD, and step ST23 is now through. On the other hand, if the current recording capacity C_{REC} is not more than the reference recording capacity C_{REF}, the processing unit 31 determines the recording area of the content storage 35 as being running out, and thus the procedure goes to step ST233. Then, the processing unit 31 searches the allocation list L_{ST} for the oldest date and time information L_{DT}, and extracts the address information I_{ADD} corresponding thereto (step ST233).

The processing unit 31 then deletes (erases), from the recording area specified by the retrieved address information I_{ADD}, the content data set CDS (step ST234). The processing unit 31 also updates the allocation list L_{ST} (step ST235). In more detail, the processing unit 31 deletes, from the allocation list L_{ST}, the date and time information I_{DT} and the address information I_{ADD} acquired in step ST233, and the identifier ID_{CDS} corresponding thereto. Then, the processing unit 31 updates the recording capacity C_{REC} in the allocation list L_{ST} to a value reflecting the deletion of the content data set CDS. After step ST235 is through, the procedure returns to step ST231 and repeats steps ST231 to ST235 until the recording capacity C_{REC} exceeds the reference recording capacity C_{REF}. In this manner, the recording area of the content storage 35 can be always available for data which is at least in size represented by the reference recording capacity C_{REF}.

With the storage completion notice AS_{CD} received by the DTE 1, the procedure goes to step ST12. From now on, it is up to the user when to operate the DTE 1 to read the content data CDS from the DCE 3. When operated, the DTE 1 generates a read request RS_{RO} (step ST13). In this embodiment, the read request RS_{RO} is a signal for requesting the DCE 3 to read the content data CDS at the user's request from the content storage 35.

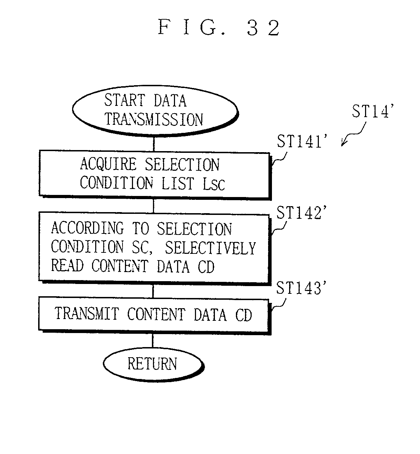

The read request RS_{RO} is transmitted from the DTE 1 to the DCE 3 (sequence SQ9). In response, the processing unit 31 of the DCE 3 carries out data transmission processing of step ST14'. Here, this step ST14' corresponds to a data transmission part in claim 22, and FIG. 32 shows the detailed processing thereof. First, the processing unit 31 extracts every selection condition SC found in the selection condition list L_{SC} (see FIG. 27b) (step ST141'). Then, the processing unit 31 accesses the content storage 35 to selectively read any content data CD satisfying the retrieved selection conditions SC from the user designated content data set CDS (step ST142'). The processing unit 31 then transmits the read content data CD(s) to the DTE 1 via the user interface 32 and the transmission path 2 (step ST143'). The DTE 1 then carries out output processing on the received content data CD(s) (step ST15), and accordingly the user can see what the content data CD(s) carry.

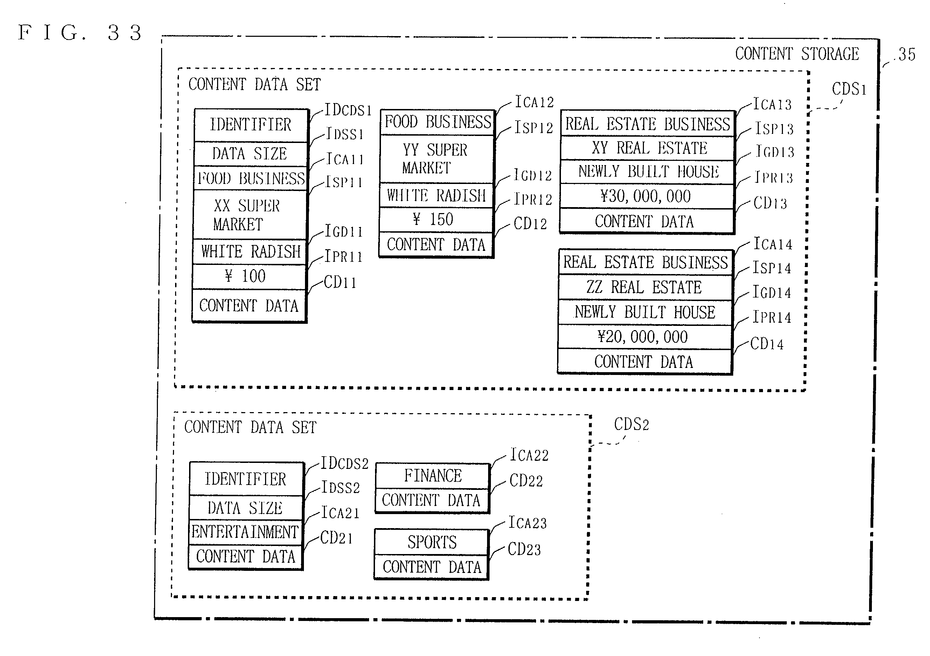

As such, in the second embodiment, the user sets, to the DCE 3, such selection condition SC as shown in FIG. 27a to define what content data CD he/she wants. Assume here that five selection conditions SC as shown in FIG. 27b are set to the DCE 3. In response to the content reservation request RS_{TR}, the server 6 transmits a content data set CDS at the user's request to the DCE 3 with a timing determined through scheduling, and the DCE 3 stores the received content data set in the content storage 35. Here, transmitted from the server 6 are presumably the content data sets CDS₁ and DCS₂ of FIG. 33, each of which carries a plurality of content data CDs. Specifically, as shown in FIG. 33, the content data set CDS₁ includes identifier ID_{CDS1}, data size I_{DSS1}, and four content data CDs CD₁₁ to CD₁₄. The content data CD₁₁ carries category information I_{CA11} indicating as food business, name information I_{SP11} as XX super market, product information I_{GD11} as a white radish, and price information I_{PR11} as ¥100. Similarly to other content data CD₁₂ to CD₁₄, attribute information I_{AT12} to I_{AT14} (category information I_{CA12} to I_{CA14}, name information I_{SP12} to I_{SP14}, product information I_{GD12} to I_{GD14}, and price information I_{PR12} to I_{PR14}) are provided, respectively. The content data set CDS₂ includes identifier ID_{CDS2}, data size I_{DSS2}, and three content data CD₂₁ to CD₂₃. Here, provided to the content data CD₂₁ is category information I_{CA21} as entertainment, while to the content data CD₂₂ and CD₂₃, category information I_{CA22} and I_{CA23} as finance and sports, respectively.

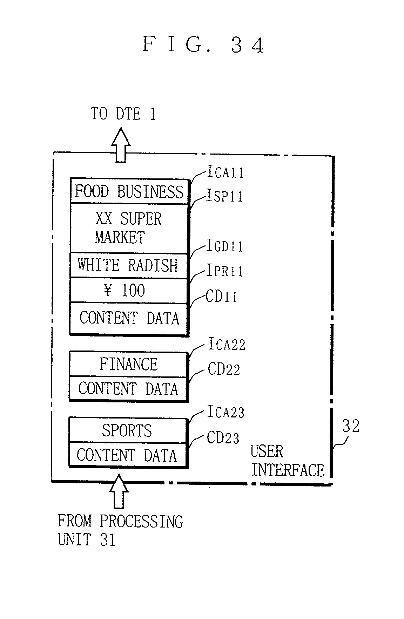

In such case, after the processing unit 31 carries out the data transmission processing (step ST14') according to the selection conditions SC (see FIG. 27b), the content data CD₁₁, CD₂₂, and CD₂₃ are selected and transmitted to the DTE 1 via the user interface 32. In the example of FIG. 34, although every information accompanying the CD₁₁, CD₂₂, and CD₂₃ is transmitted, essentially, only the CD₁₁, CD₂₂, and CD₂₃ will do. In such data transmission system of the second embodiment, since the user sets his/her selection conditions SC to the DCE 3, the user can receive only content data CD of interest.

Here, in the second embodiment, the content data CD₁₁ to CD₁ₚ are presumably all advertisements, and accompanied by attribute information I_{AT11} to I_{AT1p} corresponding thereto. However, since the attribute (product price and the number of stocks) and details of the advertisement are changeable, some content data CD₁ and/or some attribute information I_{AT1} may be already out of date at about the time when the content data set CDS₁ reaches the DCE 3. To deal with that, the server 6 generates an information change request for transmission to the DCE 3. Here, the information change request is a signal to ask the DCE 3 to update the content data CD₁ and/or the attribute information to be the latest, and includes the identifier ID_{CD1}, the content data CD₁ in the latest version, and/or the attribute information I_{AT1}. In response to such information change request, the DCE 3 uses the identifier ID_{CD1} therein to specify the recording area where the content data CD₁ and/or the attribute information I_{AT1} is stored, delete the content data CD₁ and/or the attribute I_{AT1} from thus specified recording area, and then store the content data CD₁ in the latest version and/or the attribute information I_{AT1} in the content storage 35. With such processing, without transmitting the content data set CDS₁ in its entirety, the content data CD₁ and/or attribute information I_{AT1} whichever needs change can be accordingly changed. In this sense, the transmission bandwidth of the first and second communications circuits 4 and 5 can be effectively utilized. Note that, a transmission timing of such information change request is preferably determined in scheduling. The sooner is the better for the information change request to reach the DCE 3.

Also in the second embodiment, the DTE 1 first transmits a content reservation request RS_{TR} to the server 6 to acquire the content data set CDS₂ including various news. The content data set CDS₂, however, may be transmitted to the DTE 1 due to push technology in some cases. To be more specific, the user of the DTE 1 sign-ups a distribution service of the content data set CDS₂ offered by the provider thereof (e.g., newspaper publishing company). In such case, a server on the provider side requests for the server 6 to transmit the content data set CDS₂ to the DCE 3 corresponding to the requesting user. At this time, the server on the provider side notifies, the server 6, the user's identifier ID_{USER}, the time limit LT, and the content data set CDS₂. In response, the server 6 generates transmission data TD by using thus notified information.

Also in the second embodiment, the out-of-date content data set CDS is deleted when the recording capacity C_{REC} of the content storage 35 is running short (see step ST23). This is not restrictive, and the out-of-date content data set CDS may be deleted when an expiration date previously provided thereto comes. Or, the out-of-date content data set CDS may be deleted with a lapse of predetermined time since the content data set CDS was generated. Here, information indicating the date and time when the advertisement is made is previously provided to the content data set CDS. Such information indicating the expiration date and date and time corresponds to deletion timing information in claims.

Also in the second embodiment, the DCE 3 is exemplified as reading any content data CD satisfying the selection conditions SC from the content storage 35 before transmission to the DTE 1. This is not restrictive, and the processing unit 31 may select any content data CD satisfying the selection conditions SC when received the content data set CDS, and then store the content data CD(s) into the content storage 35. Further, the processing unit 31 discards any content data CD not satisfying the selection conditions SC. In this case, the processing unit 31 responds to the read request RS_{RO} from the DTE 1, and reads the content data CD selected at reception from the content storage 35 for transmission to the DTE 1. In this manner, the user can acquire content data CD of interest only, and further, efficient use of the recording area of the content storage 35 can be achieved since no unwanted content data CD is stored therein.

While the invention has been described in detail, the foregoing description is in all aspects illustrative and not restrictive. It is understood that numerous other modifications and variations can be devised without departing from the scope of the invention.

## Claims

1. A data transmission system in which a server sends out, onto any one of communications circuits, content data designated by a content reservation request to a data circuit terminating equipment connected to a data terminal equipment for storage, wherein
said content reservation request additionally indicates a time limit by when the content data designated by said data terminal equipment is to be ready in said data circuit terminating equipment,
either said server or any one of said communications circuits comprises:
a time limit management part for managing the time limit designated by the content reservation request from said data terminal equipment; and
a scheduling part for determining, on the basis of both the time limit managed in said time limit management part and predetermined communications information, a transmission timing which ensures the content data completely transmitted by the time limit and an optimal communications circuit among from said communications circuits, and
said server comprises a data send out part for sending out the content data onto the optimal communications circuit according to the transmission timing determined by said scheduling part.

2. The data transmission system according to claim 1, wherein said predetermined communications information indicates, at least, a size of the content data designated by said content reservation request, or the number of data terminal equipment to which the content data is addressed.

3. The data transmission system according to claim 1, wherein said data circuit terminating equipment works while receiving power from any one of said communications circuits.

4. The data transmission system according to claim 1, wherein said data circuit terminating equipment comprises:
a content storage for storing the content data coming over said optimal communications circuit into a recording area thereof; and
a data transmission part for reading, from said content storage, the content data designated by a read request from said data terminal equipment for transmission to the data terminal equipment.

5. The data transmission system according to claim 4, wherein, after reading the content data designated by said read request, said data transmission part also reads content data not designated by the read request, and transmits a set of the content data to the data terminal equipment.

6. The data transmission system according to claim 4, wherein said data circuit terminating equipment transmits, to said data terminal equipment, a storage completion notice indicating that the content data is successfully stored in said recording area.

7. The data transmission system according to claim 6, wherein said storage completion notice is in a format of HTML (Hyper Text Markup Language).

8. The data transmission system according to claim 6, wherein said storage completion notice is an e-mail.

9. The data transmission system according to claim 6, wherein
said data circuit terminating equipment is capable of transmitting said storage completion notice in various formats, and
the storage completion notice is transmitted to said data terminal equipment in a format designated by a user thereof.

10. The data transmission system according to claim 4, wherein
at least one of said communications circuits includes a recording area management unit for managing the recording area of said data circuit terminating equipment, and
in response to a request from said server, said recording area management unit transmits a recording area reserve instruction to ask said data circuit terminating equipment to reserve a space in the recording area for the content data.

11. The data transmission system according to claim 4, wherein, when the content data requested by the data terminal equipment is popular, said data circuit terminating equipment inquires said server through cache processing whether the content data has been updated,
if updated, said server responsively transmits the updated content data to said data circuit terminating equipment, and
said data circuit terminating equipment stores the updated content data received from said server into the content storage.

12. The data transmission system according to claim 1, wherein, in said cache processing, said data circuit terminating equipment inquires the server when a communications traffic on said optimal communications circuit is low.

13. The data transmission system according to claim 11, wherein
the recording area of said content storage is divided into a plurality of smaller areas, and
said data circuit terminating equipment assigns each different smaller area to store the content data acquired by said content reservation request and the content data acquired through said cache processing.

14. The data transmission system according to claim 4, wherein
said data circuit terminating equipment is plurally included, and
any one of said data circuit terminating equipment acquires content data stored in a content storage of other data circuit terminating equipment.

15. The data transmission system according to claim 1, wherein said data circuit terminating equipment is implemented with a protocol to function as a mail server, and performs transmission and reception of an e-mail.

16. The data transmission system according to claim 15, wherein said data circuit terminating equipment sends out said e-mail onto said optimal communications circuit when the communications traffic thereof is low.

17. The data transmission system according to claim 16, wherein
said e-mail is assigned a priority indicating an importance thereof, and
said data circuit terminating equipment changes a timing for sending out the e-mail onto said optimal communications circuit according to the priority assigned thereto.

18. A data transmission method under which a server sends out, onto any one communications circuit among plural, content data designated by a content reservation request to a data circuit terminating equipment connected to a data terminal equipment for storage, wherein
said content reservation request additionally indicates a time limit by when the content data designated by said data terminal equipment is to be ready in said data circuit terminating equipment,
said method comprising the steps, carried out by either said server or any one of said communications circuits, of:
managing the time limit designated by the content reservation request from said data terminal equipment; and
determining, on the basis of both the time limit managed in said management step and predetermined communications information, a transmission timing which ensures the content data completely transmitted by the time limit and an optimal communications circuit among from said communications circuits, and
said method further comprising the steps, carried out by said server, of: sending out the content data onto the optimal communications circuit according to the transmission timing determined in said scheduling step.

19. A data transmission system in which content data designated by a content reservation request from a server to a data terminal equipment through a communications circuit, wherein
said content reservation request additionally indicates a download condition for downloading the content data designated by said data terminal equipment;
said data transmission system comprises:
a content reservation status data generation part for generating content reservation status data indicating the download condition for the content data on the basis of the content reservation request which has been received; and
a data transmission part for transmitting the content reservation status data generated by said content reservation status data generation part to the data terminal equipment,
by comprising said content reservation status data generation part and said data transmission part, said transmission system induces other data terminal equipment by showing the content data is available under the download condition, and
said transmission system further comprises:
a DL condition management part for managing the content data and the download condition designated by the content reservation request from said data terminal equipment;
a scheduling part for determining, on the basis of the download condition managed in said DL condition management part, a transmission timing which ensures the content data transmitted under the download condition, and
a data send out part for sending out the content data onto said communications circuit according to the transmission timing determined by said scheduling part.

20. The data transmission system according to claim 19, wherein said download condition is a time limit by which the content data designated by said data terminal equipment is to be ready in said data circuit terminating equipment.

21. The data transmission system according to claim 20, further comprising an acceptance processing part for accepting the content reservation request, and depending on how many other data terminal equipment are so far induced to receive the content data by the time limit, determines a transmission expense for the content data.

22. The data transmission system according to claim 21, wherein, when the content reservation request from said data terminal equipment carries a new time limit which is not indicated by said content reservation status data , said acceptance processing part refers to a time margin left for the time limit to determine the transmission expense for the content data.

23. The data transmission system according to claim 19, wherein
said download condition is a transmission expense for the content data designated by the content reservation request from said data terminal equipment,
said transmission system further comprises an acceptance processing part for accepting the content reservation request from said data terminal equipment, and depending on how many other data terminal equipment are so far asking for the content data transmitted by the time limit, determines the transmission expense for the content data, and
when the transmission expense determined by said acceptance processing part becomes equal to or less than a predetermined value, said data send out part sends out the content data designated by said content reservation request onto said communications circuit.

24. The data transmission system according to claim 19, wherein
said download condition is the number of other data terminal equipment asking for the content data transmitted,
said data transmission system further comprises an acceptance processing part for accepting the content reservation request from said data terminal equipment, and depending on how many other data terminal equipment are so far asking for the content data transmitted, determines a transmission expense for the content data, and
when the number of content reservation requests accepted by said acceptance processing part becomes equal to or larger than a predetermined value, said data send out part sends out the content data designated by said content reservation request onto said communications circuit.

25. A data transmission method under which content data designated by a content reservation request from a data terminal equipment is transmitted from a server to the data terminal equipment through a communications circuit, wherein
said content reservation request additionally indicates a download condition for downloading the content data designated by said data terminal equipment;
said method comprising:
a content reservation status data generation step of generating content reservation status data indicating the download condition for the content data on the basis of the content reservation request which has been received; and
a data transmission step of transmitting the content reservation status data generated in said content reservation status data generation step to the data terminal equipment,
by said content reservation status data generation step and said data transmission step, other data terminal equipment are induced to receive the content data under the download condition, and
said method further comprising:
a DL condition management step of managing the content data and the download condition designated by the content reservation request from said data terminal equipment;
a scheduling step of determining, on the basis of the download condition managed in said DL condition management part, a transmission timing which ensures the content data transmitted under the download condition, and
a data send out step of sending out the content data onto said communications circuit according to the transmission timing determined in said scheduling step.

26. A data transmission system in which a server sends out, onto any one communications circuit among plural, a content data set designated by a content reservation request to a data circuit terminating equipment connected to a data terminal equipment for storage, wherein
said content data set includes a plurality of content data each varying in content,
said content reservation request additionally indicates a time limit by when the content data set designated by said data terminal equipment is to be ready in said data circuit terminating equipment,
either said server or any one of said communications circuits comprises:
a time limit management part for managing the time limit designated by the content reservation request from said data terminal equipment; and
a scheduling part for determining, on the basis of both the time limit managed in said time limit management part and predetermined communications information, a transmission timing which ensures the content data set completely transmitted by the time limit and an optimal communications circuit among from said communications circuits,
said server comprises a data send out part for sending out the content data set onto the optimal communications circuit according to the transmission timing determined by said scheduling part, and
said data circuit terminating equipment is connected to said communications circuits, and from the content data set received from said optimal communications circuit, reads only the content data satisfying a predetermined selection condition for transmission to said data terminal equipment.

27. The data transmission system according to claim 26, wherein said data circuit terminating equipment comprises:
a content storage for storing the content data set received from said optimal communications circuit therein; and
a data transmission part for reading, from said content storage, only the content data satisfying the predetermined selection condition for transmission to said data terminal equipment in response to a read request therefrom.

28. The data transmission system according to claim 27, wherein
each of said content data included in said content data set is provided with attribute information indicating own attribute,
said data circuit terminating equipment further comprises a selection condition list storage for storing a selection condition list including a selection condition on the basis of the attribute of the content data to be transmitted to said data terminal equipment, and
said data transmission part reads, from said content storage, the content data according to the selection condition list stored in said selection condition list storage for transmission to said data terminal equipment.

29. The data transmission system according to claim 28, wherein said selection condition list is generated based on a keyword inputted into said data terminal equipment by a user.

30. The data transmission system according to claim 27, wherein said data circuit terminating equipment further comprises a data deletion part for deleting the content data set stored in said content storage with a predetermined timing.

31. The data transmission system according to claim 30, wherein, when a recording capacity of said content storage becomes smaller in value than a predetermined reference recording capacity, said data deletion part deletes the content data set stored in the content storage.

32. The data transmission system according to claim 30, wherein
said content data set is provided with deletion timing information indicating a timing when to be deleted, and
said data deletion part performs deletion according to the deletion timing information provided to the content data set.

33. The data transmission system according to claim 26, wherein said data circuit terminating equipment comprises:
a content storage for storing, from the content data set received from said optimal communications circuit, only the content data satisfying the predetermined selection condition, and
a data transmission part for reading the content data stored in said content storage for transmission to said data terminal equipment in response to a read request therefrom.

34. A data transmission method under which a server sends out, onto any one communications circuit among plural, a content data set designated by a content reservation request to a data circuit terminating equipment connected to a data terminal equipment for storage, wherein
said content data set includes a plurality of content data each varying content,
said content reservation request additionally indicates a time limit by when the content data set designated by said data terminal equipment is to be ready in said data circuit terminating equipment,
said method comprising the steps, carried out by either said server or any one of said communications circuits, of:
managing the time limit designated by the content reservation request from said data terminal equipment; and
determining, on the basis of both the time limit managed in said time limit management step and predetermined communications information, a transmission timing which ensures the content data set transmitted by the time limit and an optimal communications circuit among from said communications circuits,
said method further comprising the steps, carried out by said server, of: sending out the content data set onto the optimal communications circuit according to the transmission timing determined in said scheduling step, and
said data circuit terminating equipment is connected to said communications circuits, and from the content data set received from said optimal communications circuit, reads only the content data which has been predetermined for transmission to said data terminal equipment.
